(19) Europäisches Patentamt
European Patent Office
Office européen des brevets

(11) EP 2 061 833 B1

(12) **EUROPEAN PATENT SPECIFICATION**

(45) Date of publication and mention of the grant of the patent:
**04.09.2013 Bulletin 2013/36**

(21) Application number: **06776331.8**

(22) Date of filing: **20.07.2006**

(51) Int Cl.:
*C08K 3/34* (2006.01) *C08L 21/00* (2006.01)
*B60C 1/00* (2006.01)

(86) International application number:
**PCT/EP2006/007173**

(87) International publication number:
**WO 2008/009304 (24.01.2008 Gazette 2008/04)**

# (54) TIRE AND CROSSLINKABLE ELASTOMERIC COMPOSITION

REIFEN UND VERNETZBARE ELASTOMERE ZUSAMMENSETZUNG

PNEU ET COMPOSITION ÉLASTOMÈRE DURCISSABLE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.05.2009 Bulletin 2009/22**

(73) Proprietor: **Pirelli Tyre S.p.A.**
**20126 Milano (IT)**

(72) Inventors:
- **GALIMBERTI, Maurizio**
  **I-20126 Milano (IT)**
- **GUERRA, Gaetano**
  **I-84081 Baronissi (IT)**
- **LOSTRITTO, Angela**
  **I-81022 Casagiove (IT)**
- **GIANNINI, Luca**
  **I-20126 Milano (IT)**

(74) Representative: **Longoni, Alessandra et al**
**AL & Partners Srl**
**Via C. Colombo ang. Via Appiani**
**(Corte del Cotone)**
**20831 Seregno (MB) (IT)**

(56) References cited:
**WO-A-2006/079404** **WO-A2-2005/042278**
**US-A1- 2004 249 045** **US-B1- 6 197 105**

Remarks:
The file contains technical information submitted after the application was filed and not included in this specification

EP 2 061 833 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a tire and to a crosslinkable elastomeric composition.

More particularly, the present invention relates to a tire including at least one structural element obtained by crosslinking a crosslinkable elastomeric composition comprising at least one elastomeric polymer, at least one methylene donor compound, at least one methylene acceptor compound and at least one nanosized layered material.

Moreover, the present invention also relates to a crosslinkable elastomeric composition comprising at least one elastomeric polymer, at least one methylene donor compound, at least one methylene acceptor compound, and at least one nanosized layered material, as well as to a crosslinked manufactured article obtained by crosslinking said crosslinkable elastomeric composition.

The use of nanosized layered materials together with methylene donor compounds and methylene acceptor compounds in crosslinkable elastomeric compositions that may be advantageously used in the production of crosslinked manufactured products, in particular in the manufacturing of tires, is already known in the art.

US 6,197,105 discloses silane-treated clays which can be used as reinforcing filler or extender for elastomeric system. Said reinforcing filler useful for natural and synthetic rubbers provides some functional group on the silane treated clay that chemically reacts with the rubber polymer backbone during the curing process to yield crosslinking between the clay and the polymer. The filler consists of a kaolin clay in combination with a sulfur functional silane or a vinyl functional silane. The clay starting material can be in the form of an aqueous slurry, a dry clay or a wet crude clay for silane treatment. The silane is preferably in the form of an aqueous emulsion when mixed with the clay.

US2004/249045 discloses a particulate kaolin clay with a specific particle size distribution (95% < 3 $\mu$m) and its use in a truck or passenger tire tread rubber composition. The particles of kaolin can be calcinated or not; the calcinated kaolin is preferably prepared by soak or flash calcination process. Calcination usually leads to crystal structure modification and so modification of the characteristics of the material providing, metakaolin or fully calcinated kaolin depending on the heating temperatures.

WO2006/079404 discloses a halobutyl rubber blend containing carbon black and a delaminated talc having a surface area of 10-40 $m^2$/g, 10 an average particle size of 4-8 $\mu$m and a lamellarity index of 3-15. The rubber blend is useful for pneumatic vehicle tires to increase the air tightness of the vulcanized rubber and tear resistance and fatigue.

International Patent Application WO 2005/042278 in the name of the Applicant, discloses a tire comprising at least one structural element including a crosslinked elastomeric material obtained by crosslinking a crosslinkable elastomeric composition comprising:

(a) 100 phr of at least one diene elastomeric polymer;
(b) from 1 phr to 50 phr, preferably from 2 phr to 40 phr, more preferably from 5 phr to 30 phr, of at least one layered material having an individual layer thickness of from 0.01 nm to 30 nm, preferably of from 0.05 nm to 15 nm;
(c) from 0.1 phr to 15 phr, preferably from 0.3 phr to 10 phr, of at least one methylene donor compound;
(d) from 0.4 phr to 20 phr, preferably from 0.8 phr to 15 phr, of at least one methylene acceptor compound.

Preferably, said at least one structural element may be selected from bead filler, sidewall insert, tread underlayer, tread base. The abovementioned elastomeric composition is said to have improved mechanical properties (both static and dinamic), said improvement being obtained without observing undesired effects on their remaining properties (i.e. viscosity, hysteresis, tear resistance).

However, the abovementioned elastomeric compositions may show some drawbacks.

In particular, the Applicant has noticed that said elastomeric compositions may show poor tear resistance. Moreover, the Applicant has also noticed that said elastomeric compositions may show poor adhesion with the other elastomeric compositions present in the tire and consequent detachments from the same, especially during the use of the tire.

The Applicant has now found that it is possible to overcome the abovementioned drawbacks, by adding to the crosslinkable elastomeric compositions at least one nanosized layered material showing, in a X-ray powder diffraction (XRPD) pattern, the characteristics below reported. The so obtained crosslinkable elastomeric compositions may be advantageously used in the production of crosslinked manufactured articles, in particular in the manufacturing of tires, more in particular in the manufacturing of inner structural elements of a tire. The addition of said nanosized layered material allows to obtain crosslinkable elastomeric compositions showing improved adhesion to the other elastomeric compositions present in the tire, the abovementioned detachments problems being so avoided. Moreover, said crosslinkable elastomeric compositions show improved tear resistance. Said improvements are obtained without having a negative impact on the remaining properties of said elastomeric compositions, in particular, mechanical properties (both static and dynamic), viscosity, hysteresis, hardness.

According to a first aspect, the present invention relates to a tire comprising at least one structural element including a crosslinked elastomeric material obtained by crosslinking a crosslinkable elastomeric compositon comprising:

(a) 100 phr of at least one elastomeric polymer;
(b) from 0.1 phr to 15 phr, preferably from 0.3 phr to 10 phr, of at least one methylene donor compound;
(c) from 0.4 phr to 20 phr, preferably from 0.8 phr to 15 phr, of at least one methylene acceptor compound;
(d) from 1 phr to 50 phr, preferably from 2 phr to 40 phr, more preferably from 4 phr to 30 phr, of at least one layered material, said at least one layered material having an individual layer thickness of from 0.2 nm to 30 nm, preferably of from 0.3 nm to 15 nm, more preferably of from 0.5 nm to 2 nm;
wherein said layered material obtained by milling at least one pristine layered material or at least a layered material modified with at least one alkyl ammonium or alkyl phosphonium salts shows, in a X-ray powder diffraction (XRPD) pattern, a X-ray intensity ratio (R) defined according to the following formula:

$$(R) = [A_{(001)}/A_{(hk0)max}] \times 100$$

wherein:

- $A_{(001)}$ is the area of the peak (001) ;
- $A_{(hk0)max}$ is the area of the most intense peak (hk0), at least one of h or k being different from 0;

lower than or equal to 20, preferably lower than or equal to 15, more preferably lower than or equal to 10, still more preferably lower than or equal to 5 and said layered material (d) shows, in a X-ray powder diffraction (XRPD) pattern, a delamination index (DI) higher than or equal to 10%, preferably higher than or equal to 50%, more preferably higher than or equal to 90%, said delamination index being defined according to the following formula:

$$(DI) = [1 - (I_{001}/I^0_{001})] \times 100$$

wherein:

- $I_{(001)}$ is the intensity of the peak (001) of the mechanically treated layered material;
- $I^0_{(001)}$ is the intensity of the peak (001) of the non-mechanically treated layered material;

said $I_{(001)}$ and $I^0_{(001)}$ being defined by the following formulae:

$$I_{(001)} = A_{(001)}/A_{(hk0)}$$

$$I^0_{(001)} = A^0_{(001)}/A^0_{(hk0)}$$

wherein:

- $A_{(001)}$ is the area of the peak (001) of the mechanically treated layered material;
- $A^0_{(001)}$ is the area of the peak (001) of the non-mechanically treated layered material;
- $A_{(hk0)}$ is the area of a peak (hk0), preferably of the most intense peak (hk0), at least one of h or k being different from 0, of the mechanically treated layered material;
- $A^0_{(hk0)}$ is the area of a peak (hk0), preferably of the most intense peak (hk0), at least one of h or k being different from 0, of the non-mechanically treated layered material.

For the purposes of the present description and of the claims which follow, the term "phr" means the parts by weight of a given component of the crosslinkable elastomeric composition per 100 parts by weight of the diene elastomeric polymer(s).
For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.
According to one preferred embodiment, the tire comprises:

- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, including a crosslinked elastomeric material obtained by crosslinking a crosslinkable elastomeric composition above disclosed.

According to a further preferred embodiment, said sidewall insert extends radially from a position corresponding to the bead structure to a position corresponding to a tread lateral edge. Said sidewall insert is usually used in the case of extended mobility tires such as, for example, run flat tires.

According to a further preferred embodiment, said tread underlayer is a layer of crosslinked elastomeric material applied in a radially inner position with respect to said tread band.

According to a further preferred embodiment, said tread band is of cap and base construction and comprises a radially inner layer or tread base and a radially outer layer or tread cap. Preferably, said radially inner layer or tread base has a thickness of at least 10%, preferably of from 20% to 70%, with respect to the total thickness of the tread band.

Preferably, said at least one structural element has a dynamic elastic modulus (E'), measured at 70°C, not lower than 5 MPa, more preferably of from 8 MPa to 80 MPa.

Preferably, said at least one structural element has a tensile modulus at 100% elongation (100% Modulus) not lower than 3 MPa, preferably of from 4 MPa to 20 MPa.

Preferably, said at least one structural element has a IRHD hardness, measured at 23°C not lower than 65, more preferably of from 70 to 95.

The X-ray powder diffraction (XRPD) pattern was modelled using polarization and Lorentz factors by using the following formula:

$$I_{cor.} = I_{exp.} / \{[(1 + \cos^2 2\theta)/2)] \times [(\mathrm{sen}^2\theta \times \cos\theta)/2]\}$$

wherein $I_{cor.}$ is the corrected peak intensity and $I_{exp.}$ is the peak experimental intensity, as reported, for example, by Harold P. Klug and Leroy E. Alexander and in: "X-Ray Diffraction Procedures for Polycrystalline and Amorphous Materials", 2nd Edition (1974), Wiley-Interscience Publication, pg. 142-144.

The X-ray powder diffraction (XRPD) analysis may be carried out by methods known in the art: further details about said analysis will be given in the examples reported hereinafter.

The mechanically treated layered material may be obtained by methods known in the art such as, for example, by milling: further details about said milling will be given below.

According to a further preferred embodiment, said at least one layered material has a BET surface area, measured according to Standard ISO 5794-1:2005, of from 1 $m^2$/g to 200 $m^2$/g, preferably of from 2 $m^2$/g to 150 $m^2$/g, still more preferably of from 3 $m^2$/g to 110 $m^2$/g.

According to a further preferred embodiment, said at least one layered material has an average particle size (D50) lower than or equal to 70 $\mu$m, preferably lower than or equal to 30 $\mu$m, more preferably lower than or equal to 10 $\mu$m, still more preferably lower than or equal to 5 $\mu$m.

The average particle size (D50) may be measured according to methods known in the art such as, for example, by means of a particle size analyzer (e.g., Sedigraph 5100 from Micrometrics Instrument Corp.): further details about said analysis will be given in the examples reported hereinafter.

According to one preferred embodiment, said crosslinkable elastomeric composition may further comprise (e) at least one carbon black reinforcing filler.

According to a further preferred embodiment, said crosslinkable elastomeric composition may further comprise (f) at least one silane coupling agent.

According to a further preferred embodiment, said crosslinkable elastomeric composition may further comprise (g) discontinuous fibres.

According to a further preferred embodiment, said crosslinkable elastomeric composition may further comprise (h) at least one alkylammonium or alkyl phosphonium salt.

According to a further aspect, the present invention relates to a crosslinked manufactured article obtained by crosslinking a crosslinkable elastomeric composition above reported.

According to one preferred embodiment, said at least one elastomeric polymer (a) may be selected, for example, from ($a_1$) diene elastomeric polymers which are commonly used in sulfur-crosslinkable elastomeric compositions, that are particularly suitable for producing tires, that is to say from elastomeric polymers or copolymers with an unsaturated

chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, $\alpha$-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer ($a_1$) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, said at least one elastomeric polymer (a) may be selected, for example, from ($a_2$) elastomeric polymers of one or more monoolefins with an olefinic comonomer or derivatives thereof. The monoolefins may be selected, for example, from: ethylene and $\alpha$-olefins generally containing from 3 to 12 carbon atoms, such as, for example, propylene, 1-butene, 1-pentene, 1-hexene, 1-octene, or mixtures thereof. The following are preferred: copolymers between ethylene and an $\alpha$-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

Mixtures of the abovementioned diene elastomeric polymers ($a_1$) with the abovementioned elastomeric polymers ($a_2$), may also be used.

According to one preferred embodiment, said crosslinkable elastomeric composition comprises at least 10% by weight, preferably from 20% by weight to 100% by weight, with respect to the total weight of the at least one elastomeric polymer (a), of natural or synthetic cis-1,4-polyisoprene.

The above reported elastomeric polymers (a) may optionally be functionalized by reaction with suitable terminating agents or coupling agents. In particular, the diene elastomeric polymers ($a_1$) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to one preferred embodiment, said at least one methylene donor compound (b) may be selected, for example, from: hexamethylenetetramine (HMT); hexamethoxymethylmelamine (HMMM); formaldehyde; paraformaldehyde; trioxane; 2-methyl-2-nitro-1-propanal; substituted melamine resins such as N-substituted oxymethylmelamine resins; glycoluril compounds such as tetramethoxymethyl glycoluril; urea-formaldehyde resins such as butylated urea-formaldehyde resins; or mixtures thereof. Hexamethylenetetramine (HMT) or hexamethoxymethylmelamine (HMMM) are particularly preferred. Said at least one methylene donor compound (b) may be used as such, or as a suitable mixture with an inert filler such as, for example, silica.

According to one preferred embodiment, said at least one methylene acceptor compound (c) may be selected, for example, from: resorcinol; catechol; hydroquinone; pyrogallol; phloroglucinol; 1-naphthol; 2-naphthol; phenolic resins obtained from the condensation of an optionally substituted phenol with an aldehyde such as, for example, formaldehyde, acetaldehyde, furfural (for example, resorcinol-formaldehyde resin); modified resorcinol such as, for example, the product Ulti-Pro® 100 from Indspec Chemical Corp.; or mixtures thereof. Resorcinol is particularly preferred.

Said at least one methylene donor compound (b) and said at least one methylene acceptor compound (c) may also be added to the crosslinkable elastomeric composition in the precondensed form (condensed before being added to said crosslinkable elastomeric composition) such as, for eaxmple: resorcinol-formaldeyde resin; substituted melamine resins such as N-substituted oxymethylmelamine resins; or mixtures thereof. Said precondensed resins are able to self-crosslink as they contain different reactive groups.

According to one preferred embodiment, said at least one layered material (d) may be obtained by milling at least one pristine layered material, i.e. the layered material not treated with any modifying agent such as, for example, alkyl ammonium or alkyl phosphonium salts.

According to a further preferred embodiment, said at least one layered material (d) may be obtained by milling at least one layered material modified with at least one alkyl ammonium or alkyl phosphonium salt.

According to a further preferred, said at least one layered material (d) may be obtained by milling a mixture comprising:

- at least one pristine layered material;
- at least one alkyl ammonium or alkyl phosphonium salt.

According to one preferred embodiment, said milling is a dry milling.

For the purposes of the present invention and of the claims which follow, the expression "dry milling" means that the milling is carried out in substantial absence of any liquid components such as, for example, water, solvents, or mixtures thereof (i.e., if present, said liquid components are present in an amount lower than 10% by weight with respect to the total weight of the layered material to be milled).

According to one preferred embodiment, said milling is carried out at a temperature of from -100°C to +60°C, preferably of from 0°C to +50°C. The time of milling depends on the power of the grinder or milling device used and, therefore, may vary within wide limits, anyway it should be sufficient to obtain a layered material showing, in a X-ray powder diffraction (XRPD) pattern, the characteristics above reported. For example, the milling is carried out for a time of from 3 min to 300 hours, preferably of from 10 min to 250 hours.

Any conventional grinder or milling device which is capable of providing sufficient power to effect fracture of the compounds to be (co)milled may be used according to the present invention. Preferably, planetary ball-mill, centrifugal ball-mill are used. Centrifugal ball-mill is particularly preferred.

According to one preferred embodiment, said at least one layered material may be selected, for example, from phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable cations such as sodium ($Na^+$), calcium ($Ca^{2+}$), potassium ($K^+$), or magnesium ($Mg^{2+}$), present at the interlayer surfaces.

Examples of layered materials which may be used according to the present invention and are available commercially are the products known by the name of Dellite® 67G, Dellite® HPS, Dellite® 72T, Dellite® 43B, from Laviosa Chimica Mineraria S.p.A.; Cloisite® Na, Cloisite® 25A, Cloisite® 10A, Cloisite® 15A, Cloisite® 20A, from Southern Clays; Nanofil® 5, Nanofil® 8, Nanofil® 9, from Süd Chemie; Bentonite® AG/3 from Dal Cin S.p.A.

According to one preferred embodiment, said at least one alkyl ammonium or alkyl phosphonium salt may be selected, for example, from quaternary ammonium or phosphonium salts having general formula (I):

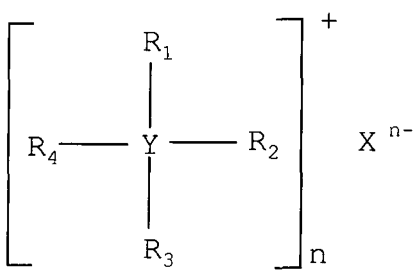 (I)

wherein:

- Y represents N or P;
- $R_1$, $R_2$, $R_3$ and $R_4$, which may be equal or different from each other, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulfur;

- $X^{n-}$ represents an anion such as the chloride ion, the sulphate ion or the phosphate ion;
- n represents 1, 2 or 3.

Said alkyl ammonium or alkyl phosphonium salt is capable of undergoing ion exchange reactions with the ions which, as already disclosed above, are present at the interlayers surfaces of the layered materials.

In the case of using a layered material modified with at least one alkyl ammonium or alkyl phosphonium salt, its modification may be carried out by treating said layered material with at least one alkyl ammonium or alkyl phosphonium salt before subjecting it to a milling process above disclosed.

The treatment of the layered material with the at least one alkyl ammonium or alkyl phosphonium salt may be carried out according to known methods such as, for example, by an ion exchange reaction between the layered material and the at least one alkyl ammonium or alkyl phosphonium salt: further details about said treatment may be found, for example, in United States Patents US 4,136,103, US 5,747,560, or US 5,952,093.

As disclosed above, said crosslinkable elastomeric composition may further comprise (e) at least one carbon black reinforcing filler.

According to one preferred embodiment, said at least one carbon black reinforcing filler (e) may be selected, for example, from those having a surface area of not less than 20 $m^2/g$ (determined by CTAB absorption as described in Standard ISO 6810:1995).

According to one preferred embodiment, said at least one carbon black reinforcing filler (e) is present in the crosslinkable elastomeric composition in an amount of from 0 phr to 120 phr, preferably of from 20 phr to 90 phr.

As disclosed above, said crosslinkable elastomeric composition may further comprise (f) at least one silane coupling agent.

According to one preferred embodiment, said at least one silane coupling agent (f) may be selected, for example, from those having at least one hydrolizable silane group which may be identified, for example, by the following general formula (II):

$$(R)_3Si\text{-}C_nH_{2n}\text{-}X \qquad \text{(II)}$$

wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6, extremes included; X is a group selected from: nitroso, mercapto, amino, epoxide, vinyl, imide, chloro, $-(S)_mC_nH_{2n}\text{-}Si\text{-}(R)_3$, or -S-COR, wherein m and n are integers of from 1 to 6, extremes included and the groups R are defined as above.

Among the silane coupling agents that are particularly preferred are bis(3-triethoxysilyl-propyl)tetrasulphide, bis(3-triethoxysilylpropyl)-disulphide, 3-octanoylthio-1-propyltriethoxysilane, 3-aminopropyltriethoxysilane, or mixtures thereof. Said coupling agents may be used as such or as a suitable mixture with an inert filler (for example, carbon black) so as to facilitate their incorporation into the elastomeric polymer(s).

According to one preferred embodiment, said at least one silane coupling agent (f) is present in the crosslinkable elastomeric composition in an amount of from 0 phr to 25 phr, preferably of from 0.5 phr to 10 phr, more preferably of from 1 phr to 5 phr.

As disclosed above, said crosslinkable elastomeric composition may further comprise (g) discontinuous fibres.

According to one preferred embodiment, said discontinuous fibres (g) are aramid fibres, in particular short fibrillated poly(para-phenyleneterephthalamide) fibres (also known as aramid pulp), of the type known commercially as Kevlar® pulp from DuPont or Twaron® pulp from Teijin Twaron, which are disclosed in United States Patent US 4,871,004 mentioned above. Preferably, the aramid fibres used according to the present invention have a configuration with a main trunk with a length (L) of from 0.2 mm to 0.5 mm, a diameter (D) of from 0.005 mm to 0.02 mm and an aspect ratio L/D of from 10 to 1000, and a plurality of fibrils or small branches which extend outwards from said trunk over the entire length of the trunk and which have a diameter that is substantially smaller than the diameter of said trunk. The surface area of said fibres is of from 4 $m^2/g$ to 20 $m^2/g$. The surface area of the aramid fibres according to the present invention is of from 30 to 60 times greater than that of fibres having the same diameter but not comprising fibrils.

According to one preferred embodiment, the abovementioned aramid fibres may be used either as such or in the form of a predispersion in a suitable polymer matrix which serves as a vehicle, consisting of, for example, natural rubber, butadiene/stirene copolymers, ethylene/vinyl acetate copolymers, or mixtures thereof. Preferably, a blend ("masterbatch") in which the abovementioned fibres are dispersed in natural rubber, which is known by the trade name Kevlar® Engineered Elastomer from Du Pont and which is composed of 23% by weight of Kevlar® and 77% by weight of natural rubber, is used.

It should be pointed out that although the discontinuous fibres that are preferred according to the present invention are selected from the aramid fibres described above, said discontinuous fibres may also be selected, for example, from: fibres based on other polyamides (for example Nylon), on polyesters, on polyolefins, on polyvinyl alcohol;

glass fibres; or natural fibres such as, for example, cellulose or lignine; or mixtures thereof.

According to one preferred embodiment, said discontinuous fibres (g) are present in the crosslinkable elastomeric composition in an amount of from 0 phr to 10 phr, preferably of from 0.5 phr to 6 phr.

As disclosed above, said crosslinkable elastomeric composition may further comprise (h) at least one alkyl ammonium or alkyl phosphonium salt.

According to one preferred embodiment, said at least one alkyl ammonium or alkyl phosphonium salt (h) may be selected from those having general formula (I) above disclosed.

According to one preferred embodiment, said at least one alkyl ammonium or alkyl phosphonium salt (h) is present in the crosslinkable elastomeric composition in an amount of from 0 phr to 50 phr, preferably of from 0.5 phr to 20 phr, more preferably of from 1 phr to 10 phr.

Examples of alkyl ammonium or alkyl phosphonium salts which may be used according to the present invention and are available commercially is the product known by the name of Arquad® HC Pastilles, Arquad® 2HT-75, Arquad® MC-50, Duoquad® T-50, from Akzo Nobel, or Bardac® LF 70 from Lonza.

At least one additional reinforcing filler may advantageously be added to the above reported crosslinkable elastomeric composition, in an amount generally of from 0 phr to 120 phr, preferably of from 20 phr to 90 phr. The reinforcing filler may be selected from those commonly used for crosslinked manufactured articles, in particular for tires, such as, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to Standard ISO 5794-1:2005) of from 50 $m^2/g$ to 500 $m^2/g$, preferably of from 70 $m^2/g$ to 200 $m^2/g$.

When a reinforcing filler comprising silica is present, the crosslinkable elastomeric composition may advantageously incorporate a further silane coupling agent capable of interacting with silica and of linking it to the elastomeric polymer(s) during the vulcanization. Examples of silane coupling agents which may be used have been already disclosed above.

The crosslinkable elastomeric composition above disclosed may be vulcanized according to known techniques, in particular with sulfur-based vulcanizing systems commonly used for elastomeric polymer(s). To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, $ZnCO_3$, zinc salts of saturated or unsaturated fatty acids containing from 8 to 18 carbon atoms, such as, for example, zinc stearate, zinc octanoate, which are preferably formed in situ in the elastomeric composition from ZnO and fatty acid, and also BiO, PbO, $Pb_3O_4$, $PbO_2$, or mixtures thereof. Said zinc salts may be used as such, or as a suitable mixture with an inert filler such as, for example, silica.

Accelerators that are commonly used may be selected, for example, from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, or mixtures thereof.

Moreover, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from 0 phr to 70 phr, preferably of from of 5 phr to 30 phr.

The above reported crosslinkable elastomeric composition may be prepared by mixing together the elastomeric polymer(s) and the layered material with the reinforcing filler and the other additives optionally present, according to techniques known in the art. Preferably, the elastomeric polymer(s), the layered material and, optionally, the alkyl ammonium or alkyl phosphonium salts and/or a portion the silane coupling agent, may be mixed together before adding the reinforcing filler and the other additives optionally present. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

The present invention will now be illustrated in further detail by means of a number of illustrative embodiments, with reference to the attached Fig. 1-4 which are a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680, or EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric material. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) which may be made according to the present invention, wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A side wall (108) is also applied externally onto the carcass ply (101), this side wall extending, in an axially external position, from the bead (103) to the end of the belt structure (106).

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) which may be made according to the present invention, is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

Fig. 2, shows a tire (100) having a structure as described in Fig. 1 where the tread underlayer (111) which may be made according to the present invention, is placed between the belt structure (106) and the carcass ply (101).

Fig.3, shows a tire (100) having a structure as described in Fig. 1 where a sidewall insert (113) which may be made according to the present invention, which extends radially from a position corresponding to the bead structure to a position corresponding to a tread lateral edge, is placed in an axially internal position with respect to the carcass ply: for example, as represented in Fig. 3, said sidewall insert is placed between the carcass ply (101) and the liner (112). Alternatively, in the case in which more carcass plies are present, a sidewall insert (113) is placed between two of said carcass plies (not represented in Fig. 3.) Alternatively, a sidewall insert is placed beetween the carcass ply and the side wall (not represent in Fig. 3). More than one sidewall insert may be present as disclosed, for example, in United States Patent US 5,238,040, or in European Patent EP 943,466.

Fig. 4, shows a tire (100) having a structure as described in Fig. 1 where a tread band (109) is of cap and base construction. More in particular, said tread band (109) comprises a radially inner layer or tread base (109c) and a radially outer layer or tread cap (109b): the tread base (109c) may be made according to the present invention.

As represented in Fig. 4, the tread base (109c) has a uniform thickness. In any case, the thickness of the tread base (109c) may also be not uniform but, for example, greater near its outer edges and/or at the central zone thereof.

The process for producing the tire according to the present invention may be carried out according to methods and using apparatus that are known in the art, as described, for example, in European Patents EP 199,064, or in United States Patent US 4,872,822 or US 4,768,937, said process including manufacturing the crude tire, and subsequently moulding and vulcanizing the crude tire.

Although the present invention has been illustrated specifically in relation to a tire, other crosslinked elastomeric manufactured articles that can be produced according to the invention may be, for example, conveyor belts, drive belts, or hoses.

The present invention will be further illustrated below by means of a number of illustrative embodiments, which are given for purely indicative purposes and without any limitation of this invention.

EXAMPLE 1

Preparation of the layered material

30.0 g of Dellite® HPS (natural montmorillonite belonging to the smectite family from Laviosa Chimica Mineraria S.p.A.) were added to a 0.250 1 centrifugal ball-mill (model S100 from Retsch), loaded with 7 stainless steel balls having a diameter of 20.0 mm. The mixture was ground, for 3 hours, with a rotating speed of 440 rpm, at ambient temperature (23°C). 29.5 g of solid product were obtained.

The obtained powder was subjected to an average particle size measurement. To this aim 6.0 g of the obtained powder was dispersed in 60.0 ml of isopropyl alcohol and was maintained under stirring, at room temperature (23°C), for 3 minutes. The obtained dispersion was loaded to a particle size analyzer (Micrometric Sedigraph 5100). The average particle size (D50) was 21.4 $\mu$m (D50 means that 50% by weight of the particles has a particle hydrodynamic size not higher than or equal to 21.4 $\mu$m).

Moreover, the BET surface area of the obtained powder was measured according to Standard ISO 5794-1: 2005. The BET surface area was 99.0 $m^2/g$.

The obtained product was subjected to X-ray powder diffraction (XRPD) analysis. The analysis was performed by using a Bruker D8 automatic diffractometer for powder, equipped with Göbel-mirror monochromator.

Instrumental and measuring conditions were the following: CuK$\alpha$ radiation; 40 kV/20 mA voltage/current; divergence and detector slits of 1.0°, 0.6° and 0.8°, 0.05° 2$\theta$ step, using a time for step of 3 s; diffraction angle (2$\theta$) from 2° to 80°.

For comparative purposes, a sample of a non-mechanically treated Dellite® HPS was subjected to a X-ray powder diffraction (XRPD) analysis.

The obtained X-Ray powder diffraction patterns were reported in Fig. 5 [abscissa axis diffraction angles (2$\theta$) expressed in degrees (°); ordinate axis intensity expressed in arbitrary units (A.U.)] wherein:

A: is the X-Ray powder diffraction pattern of the non-mechanically treated Dellite® HPS (comparative) [A' represents an expanded view of peak (001)];
B: is the X-Ray powder diffraction pattern of the mechanically treated Dellite® HPS obtained as disclosed above [B' represents an expanded view of peak (001)].

The X-ray powder diffraction (XRPD) patterns A and B were used to determine both the X-ray intensity ratio (R) and the delamination index (DI) as defined above. The obtained data were the following:

- X-ray intensity ratio (R) = 16;
- delamination index (DI) = 30%.

Moreover, the X-ray powder diffraction (XRPD) patterns A and B also show the d-spacing value which was calculated using the following formula:

$$\text{d-spacing} = \lambda/2\sin\theta$$

in which λ is the wavelength of the Kα radiation of Cu (average of Kα1 and Kα2) equal to 1.54178 Å. The d-spacing value corresponds to the value of the distance between the parallel crystal planes of the layered material. In particular, said value is the average distance between the contiguous layers of the layered material.

EXAMPLE 2

Preparation of the layered material

30.0 g of Dellite® 67G (organo-modified montmorillonite belonging to the smectite family from Laviosa Chimica Mineraria S.p.A.) were added to a 0.250 1 centrifugal ball-mill (model S100 from Retsch), loaded with 7 stainless steel balls having a diameter of 20.0 mm. The mixture was ground, for 6 hours, with a rotating speed of 440 rpm, at ambient temperature (23°C). 29.5 g of solid product were obtained.

The obtained powder was subjected to an average particle size measurement. To this aim 6.0 g of the obtained powder was dispersed in 60.0 ml of isopropyl alcohol and was maintained under stirring, at room temperature (23°C), for 3 minutes. The obtained dispersion was loaded to a particle size analyzer (Micrometric Sedigraph 5100). The average particle size (D50) was 0.88 μm (D50 means that 50% by weight of the particles has a particle hydrodynamic size not higher than or equal to 0.88 μm).

Moreover, the BET surface area of the obtained powder was measured according to Standard ISO 5794-1: 2005. The BET surface area was 3.9 $m^2/g$.

The obtained product was subjected to X-ray powder diffraction (XRPD) analysis. The analysis was performed by using a Bruker D8 automatic diffractometer for powder, equipped with Göbel-mirror monochromator.

Instrumental and measuring conditions were the following: CuKα radiation; 40 kV/20 mA voltage/current; divergence and detector slits of 1.0°, 0.6° and 0.8°, 0.05° 2θ step, using a time for step of 3 s; diffraction angle (2θ) from 2° to 80°.

For comparative purposes, a sample of a non-mechanically treated Dellite® 67G was subjected to a X-ray powder diffraction (XRPD) analysis.

The obtained X-Ray powder diffraction patterns were reported in Fig. 6 [abscissa axis diffraction angles (2θ) expressed in degrees (°); ordinate axis intensity expressed in arbitrary units (A.U.)] wherein:

C: is the X-Ray powder diffraction pattern of the non-mechanically treated Dellite® 67G (comparative);
B: is the X-Ray powder diffraction pattern of the mechanically treated Dellite® 67G obtained as disclosed above.

The X-ray powder diffraction (XRPD) patterns C and D were used to determine both the X-ray intensity ratio (R) and the delamination index (DI) as defined above. The obtained data were the following:

- X-ray intensity ratio (R) = 2;
- delamination index (DI) = 90%.

Moreover, the X-ray powder diffraction (XRPD) patterns C and D also show the d-spacing value which was calculated using the following formula:

$$\text{d-spacing} = \lambda / 2\sin\theta$$

in which λ is the wavelength of the Kα radiation of Cu (average of Kα1 and Kα2) equal to 1.54178 Å. The d-spacing value corresponds to the value of the distance between the parallel crystal planes of the layered material. In particular, said value is the average distance between the contiguous layers of the layered material.

EXAMPLES 3-4

Preparation of the elastomeric composition

The elastomeric compositions given in Table 1 were prepared as follows (the amounts of the various components are given in phr).

All the components, except silane coupling agent (X50S®), sulfur, accelerator (DCBS) and hexamethylenetetramine (HMT), were mixed together in an internal mixer (model Pomini PL 1.6) for about 5 minutes ($1^{st}$ Step). As soon as the temperature reached 145±5°C, the elastomeric material was discharged. The silane coupling agent (X50S®),

sulfur, accelerator (DCBS) and hexamethylenetetramine (HMT), were then added and mixing was carried out in an open roll mixer (2nd Step).

TABLE 1

| EXAMPLE | 3 (*) | 4 |
|---|---|---|
| 1st STEP | | |
| IR | 100 | 100 |
| N326 | 65 | 65 |
| Zinc oxide | 5 | 5 |
| Antioxidant | 2 | 2 |
| Zinc octanoate/silica (75/25 wt/wt) | 2.66 | 2.66 |
| Dellite® 67G | 5 | - |
| Compound of Example 2 | | 5 |
| Resorcinol | 1.3 | 1.3 |
| 2nd STEP | | |
| X50S® | 4 | 4 |
| Sulfur | 4.45 | 4.45 |
| DCBS | 1.5 | 1.5 |
| HMT | 0.4 | 0.4 |

(*): comparative.
IR: cis-1,4-polyisoprene (SKI3 - Nizhnekamskneftechim Export);
N326: carbon black (Degussa-Hüls);
Zinc oxide: Rhenogran® ZnO-80 (RheinChemie);
Antioxidant: phenyl-p-phenylenediamine (6-PPD - Akzo Nobel);
Zinc octanoate/silica (75/25 wt/wt): Polyplastol® 23 (Eigenmann & Veronelli);
Dellite® 67G: organo-modified montmorillonite belonging to the smectite family (Laviosa Chimica Mineraria S.p.A.);
X50S®: silane coupling agent comprising 50% by weight of carbon black and 50% by weight of bis(3-triethoxysilylpropyl)tetrasulphide (Degussa-Hüls);
DCBS (accelerator): benzothiazyl-2-dicyclohexyl-sulfenamide (Vulkacit® DZ/EGC - Bayer);
HMT: hexamethylenetetramine .

The Mooney viscosity ML(1+4) at 100°C was measured, according to Standard ISO 289-1:1994, on the non-crosslinked elastomeric compositions obtained as described above. The results obtained are given in Table 2.

Said crosslinkable elastomeric compositions were also subjected to MDR rheometric analysis using a Monsanto MDR rheometer, the tests being carried out at 170°C, for 30 minutes, at an oscillation frequency of 1.66 Hz (100 oscillations per minute) and an oscillation amplitude of ± 0.5°. The obtained results are given in Table 2.

The static mechanical properties according to Standard ISO 37:1994 as well as hardness in IRHD degrees, both at 23°C and at 100°C, according to ISO standard 48:1994, were measured on samples of the abovementioned elastomeric compositions vulcanized at 170°C, for 10 minutes. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C, for 10 minutes) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of

±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Furthermore, the crosslinkable elastomeric compositions obtained as disclosed above, were subjected to adhesion (peeling) tests.

Using the elastomeric compositions obtained as described above, two-layer test pieces were prepared for measuring the peel force, by superimposing two layers of the same non-crosslinked elastomeric composition, followed by crosslinking (at 170°C, for 10 minutes). In detail, the test pieces were prepared as follows. Each elastomeric composition was calendered so as to obtain a sheet with a thickness equal to 3 mm ± 0.2 mm. From the sheet thus produced were obtained plates with dimensions equal to 220 mm (± 1.0 mm) x 220 mm (± 1.0 mm) x 3 mm (± 0.2 mm), marking the direction of the calendering. One side of each plate was protected with a polyethylene sheet, while a reinforcing fabric made of rubberized polyamide with a thickness of 0.88 mm ± 0.05 mm was applied to the opposite side, orienting the strands in the direction of calendering and rolling the composite thus assembled so as to achieve good adhesion between the fabric and the non-crosslinked elastomeric compositon. After cooling, sheets were produced from the composite thus obtained, by punching, these sheets having dimensions equal to 110 mm (± 1.0 mm) x 25 mm (± 1.0 mm) x 3.88 mm (± 0.05 mm), taking care to ensure that the major axis of each sheet was oriented in the direction of the strands of the fabric.

A first sheet made of the crosslinkable elastomeric composition obtained as disclosed above (i.e., the crosslinkable elastomeric composition obtained in Example 3 or in Example 4) constituting the first layer was placed in a mould, the polyethylene film was removed, two Mylar® strips acting as lateral separators (thickness = 0.2 mm) were applied laterally and a third strip again made of Mylar® (thickness = 0.045 mm) was applied to one extremity of the sheet in order to create a short free section not adhering to the second layer. A second sheet made of the same crosslinkable elastomeric composition (i.e., the crosslinkable elastomeric composition obtained in Example 3 or in Example 4) above disclosed, from which the polyethylene film was previuosly removed, was then applied to the first sheet thus prepared, constituting the second layer (the first layer and the second layer being made of the same crosslinkable elastomeric composition), thus obtaining a test piece which was then crosslinked by heating at 170°C, for 10 min, in a press.

Subsequently, the test pieces crosslinked as described above were conditioned at room temperature (23°C ± 2°C) for at least 16 hours and were then subjected to the peel test using a Zwick Z005 dynamometer, the clamps of which were applied to the free section of each layer. A traction speed equal to 260 mm/min ± 20 mm/min was then applied and the peel force values thus measured, expressed in Newtons (N), are given in Table 2 and are each the average value calculated for 4 test pieces. The same tests were carried out on the test pieces crosslinked as described above and conditioned at 100°C for at least 16 hours: the obtained results were given on Table 2 and are each the average value calculated for 4 test pieces.

Finally, the tear resistance values were measured according to Standard ISO 34-1:2004 and are also given in Table 2.

TABLE 2

| EXAMPLE | 3 (*) | 4 |
|---|---|---|
| Mooney viscosity ML (1+4) | 76.1 | 71.6 |
| MDR RHEOMETRIC ANALYSIS (30 min, 170°C) | | |
| ML (dNm) | 3.44 | 3.50 |
| MH (dNm) | 40.07 | 42.79 |
| TS1 (min) | 0.412 | 0.375 |
| TS2 (min) | 0.499 | 0.456 |
| T90 (min) | 3.20 | 3.28 |
| STATIC MECHANICAL PROPERTIES | | |
| 50% Modulus (CA0.5) (MPa) | 2.75 | 2.71 |
| 100% Modulus (CA1) (MPa) | 4.93 | 4.90 |
| Stress at break (MPa) | 13.65 | 15.69 |

(continued)

| STATIC MECHANICAL PROPERTIES | | |
|---|---|---|
| Elongation at break (%) | 265.8 | 291.1 |
| DYNAMIC MECHANICAL PROPERTIES | | |
| E' (23°C) (MPa) | 17.00 | 19.16 |
| E' (70°C) (MPa) | 14.12 | 15.85 |
| ΔE' (23-70°C) (MPa) | 2.90 | 3.30 |
| Tan delta (23°C) | 0.240 | 0.210 |
| Tan delta (70°C) | 0.177 | 0.160 |
| IRHD Hardness (23°C) | 85.4 | 84.7 |
| IRHD Hardness (23°C) | 81.1 | 81.5 |
| Peel force (N) (23°C) | 112.3 | 193.3 |
| Peel force (N) (100°C) | 90.1 | 122.6 |
| Tear resistance (kN/m) | 60.2 | 105.3 |
| (*): comparative. | | |

EXAMPLE 5 (comparative)

Preparation of the elastomeric composition

The elastomeric composition given in Table 3 was prepared as follows (the amounts of the various components are given in phr).

In an internal mixer (model Pomini PL 1.6) the natural rubber (NR), and Dellite® 67G, were mixed together for about 4 min (1st Step). As the temperature reached 110±5°C, the mixture was discharged. The obtained mixture and all the remaining components, except accelerator (TBBS), retardant (PVI), methylated melamine formaldeyde/silica (HMMM 65%), and sulfur, were added to an internal mixer (model Pomini PL 1.6) and mixed for about 5 min (2nd Step). As soon as the temperature reached 145±5°C, the elastomeric material was discharged. The accelerator (TBBS), retardant (PVI), methylated melamine formaldeyde/silica (HMMM 65%), and sulfur, were then added and mixing was carried out in an open roll mixer (3rd Step).

EXAMPLE 6

Preparation of the elastomeric composition

The elastomeric composition given in Table 3 was prepared as follows (the amounts of the various components are given in phr).

In an internal mixer (model Pomini PL 1.6) the natural rubber (NR), compound of Example 1, and alkyl ammonium salt (Arquad® HC pastilles), were mixed together for about 4 min (1st Step). As the temperature reached 110±5°C, the mixture was discharged. The obtained mixture and all the remaining components, except accelerator (TBBS), retardant (PVI), methylated melamine formaldeyde/silica (HMMM 65%), and sulfur, were added to an internal mixer (model Pomini PL 1.6) and mixed for about 5 min (2nd Step). As soon as the temperature reached 145±5°C, the elastomeric material was discharged. The accelerator (TBBS), retardant (PVI), methylated melamine formaldeyde/silica (HMMM 65%), and sulfur, were then added and mixing was carried out in an open roll mixer (3rd Step).

EXAMPLE 7

Preparation of the elastomeric composition

The elastomeric composition given in Table 3 was prepared as follows (the amounts of the various components are given in phr).

In an internal mixer (model Pomini PL 1.6) the natural rubber (IR), compound of Example 1, the alkyl ammonium

salt (Arquad® HC pastilles), and the coupling agent (TESPT), were mixed together for about 4 min (1st Step). As the temperature reached 110±5°C, the mixture was discharged. The obtained mixture and all the remaining components, except accelerator (TBBS), retardant (PVI), methylated melamine formaldeyde/silica (HMMM 65%), and sulfur, were added to an internal mixer (model Pomini PL 1.6) and mixed for about 5 min (2nd Step). As soon as the temperature reached 145±5°C, the elastomeric material was discharged. The accelerator (TBBS), retardant (PVI), methylated melamine formaldeyde/silica (HMMM 65%), and sulfur, were then added and mixing was carried out in an open roll mixer (3nd Step).

TABLE 3

| EXAMPLE | 5(*) | 6 | 7 |
|---|---|---|---|
| 1st STEP | | | |
| NR | 100 | 100 | 100 |
| Dellite® 67G | 7 | - | - |
| Compound of Example 1 | - | 3.85 | 3.85 |
| ARQUAD® HC Pastilles | - | 3.15 | 3.15 |
| TESPT | - | - | 0.4 |
| 2nd STEP | | | |
| N326 | 54 | 54 | 54 |
| Zeosil® 1165 MP | 20 | 20 | 20 |
| Antioxidant | 2 | 2 | 2 |
| X50S® | 5 | 5 | 4.2 |
| Resorcinol | 1.3 | 1.3 | 1.3 |
| Stearic acid | 1.7 | 1.7 | 1.7 |
| ZnO | 3.5 | 3.5 | 3.5 |
| 3rd STEP | | | |
| TBBS | 1.2 | 1.2 | 1.2 |
| PVI | 0.4 | 0.4 | 0.4 |
| HMMM 65% | 2.2 | 2.2 | 2.2 |

(continued)

| 3rd STEP | | | |
|---|---|---|---|
| Sulfur | 3 | 3 | 3 |

(*): comparative.
NR: natural rubber;
Dellite® 67G: organo-modified montmorillonite, belonging to the smectite family (Laviosa Chimica Mineraria S.p.A.);
Arquad® HC Pastilles: di(hydrogenated tallow)-dimethylammonium chloride (Akzo Nobel);
TESPT: silane coupling agent bis(3-triethoxysilyl-propyl) tetrasulphide (Si69® - Degussa-Hüls);
N326: carbon black (Degussa-Hüls);
ZEOSIL® 1165 MP: silica (Rhodia);
Antioxidant: phenyl-p-phenylenediamine (6-PPD - Akzo Nobel);
X50S®: silane coupling agent comprising 50% by weight of carbon black and 50% by weight of bis(3-triethoxysilylpropyl) tetrasulphide (Degussa-Hüls);
TBBS (accelerator): N-t-butyl-benzothiazyl-sulfenamide (Vulkacit® NZ/ECG - Lanxess);
PVI (retardant): N-cyclohexylthiophthalimide (Santogard® PVI - Monsanto);
HMMM 65%: methylated melamine formaldehyde/silica (65/35 wt/wt).

The Mooney viscosity ML(1+4) at 100°C was measured, according to Standard ISO 289-1:1994, on the non-crosslinked elastomeric compositions obtained as described above. The results obtained are given in Table 4.

Said crosslinkable elastomeric compositions were also subjected to MDR rheometric analysis using a Monsanto MDR rheometer, the tests being carried out at 170°C, for 30 minutes, at an oscillation frequency of 1.66 Hz (100 oscillations per minute) and an oscillation amplitude of ± 0.5°. The obtained results are given in Table 4.

The static mechanical properties according to Standard ISO 37:1994 as well as hardness in IRHD degrees, both at 23°C and at 100°C, according to ISO standard 48:1994, were measured on samples of the abovementioned elastomeric compositions vulcanized at 170°C, for 10 minutes. The results obtained are given in Table 4.

Table 4 also shows the dynamic mechanical properties, measured using an Instron dynamic device in the traction-compression mode according to the following methods. A test piece of the crosslinked elastomeric composition (vulcanized at 170°C, for 10 minutes) having a cylindrical form (length = 25 mm; diameter = 12 mm), compression-preloaded up to a 10% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Furthermore, the crosslinkable elastomeric compositions obtained as disclosed above, were subjected to adhesion (peeling) tests.

Using the elastomeric compositions obtained as described above, two-layer test pieces were prepared for measuring the peel force, by superimposing two layers of the same non-crosslinked elastomeric composition, followed by crosslinking (at 170°C, for 10 minutes). In detail, the test pieces were prepared as follows. Each elastomeric composition was calendered so as to obtain a sheet with a thickness equal to 3 mm ± 0.2 mm. From the sheet thus produced were obtained plates with dimensions equal to 220 mm (± 1.0 mm) x 220 mm (± 1.0 mm) x 3 mm (± 0.2 mm), marking the direction of the calendering. One side of each plate was protected with a polyethylene sheet, while a reinforcing fabric made of rubberized polyamide with a thickness of 0.88 mm ± 0.05 mm was applied to the opposite side, orienting the strands in the direction of calendering and rolling the composite thus assembled so as to achieve good adhesion between the fabric and the non-crosslinked elastomeric compositon. After cooling, sheets were produced from the composite thus obtained, by punching, these sheets having dimensions equal to 110 mm (± 1.0 mm) x 25 mm (± 1.0 mm) x 3.88 mm (± 0.05 mm), taking care to ensure that the major axis of each sheet was oriented in the direction of

the strands of the fabric.

A first sheet made of the crosslinkable elastomeric composition obtained as disclosed above (i.e., the crosslinkable elastomeric composition obtained in Example 5, or in Example 6, or in Example 7) constituting the first layer was placed in a mould, the polyethylene film was removed, two Mylar® strips acting as lateral separators (thickness = 0.2 mm) were applied laterally and a third strip again made of Mylar® (thickness = 0.045 mm) was applied to one extremity of the sheet in order to create a short free section not adhering to the second layer. A second sheet made of the same crosslinkable elastomeric composition (i.e., the crosslinkable elastomeric composition obtained in Example 5, or in Example 6, or in Example 7) above disclosed, from which the polyethylene film was previuosly removed, was then applied to the first sheet thus prepared, constituting the second layer (the first layer and the second layer being made of the same crosslinkable elastomeric composition), thus obtaining a test piece which was then crosslinked by heating at 170°C, for 10 min, in a press.

Subsequently, the test pieces crosslinked as described above were conditioned at room temperature (23°C ± 2°C) for at least 16 hours and were then subjected to the peel test using a Zwick Z005 dynamometer, the clamps of which were applied to the free section of each layer. A traction speed equal to 260 mm/min ± 20 mm/min was then applied and the peel force values thus measured, expressed in Newtons (N), are given in Table 4 and are each the average value calculated for 4 test pieces. The same tests were carried out on the test pieces crosslinked as described above and conditioned at 100°C for at least 16 hours: the obtained results were given on Table 4 and are each the average value calculated for 4 test pieces.

Finally, the tear resistance values were measured according to Standard ISO 34-1:2004 and are also given in Table 4.

TABLE 4

| EXAMPLE | 5 (*) | 6 | 7 |
|---|---|---|---|
| Mooney viscosity ML (1+4) | 89.6 | 79.1 | 79.1 |
| MDR RHEOMETRIC ANALYSIS (30 min, 170°C) | | | |
| ML (dNm) | 3.45 | 2.87 | 2.92 |
| MH (dNm) | 44.64 | 45.92 | 45.25 |
| TS1 (min) | 0.610 | 0.650 | 0.660 |
| TS2 (min) | 0.770 | 0.820 | 0.830 |
| T90 (min) | 3.64 | 3.64 | 3.68 |
| STATIC MECHANICAL PROPERTIES | | | |
| 50% Modulus (CA0.5) (MPa) | 4.07 | 4.20 | 4.08 |
| 100% Modulus (CA1) (MPa) | 7.26 | 7.38 | 7.30 |
| Stress at break (MPa) | 19.51 | 18.6 | 18.8 |
| Elongation at break (%) | 287.9 | 283.7 | 281.4 |
| DYNAMIC MECHANICAL PROPERTIES | | | |
| E' (23°C) (MPa) | 24.43 | 24.90 | 22.58 |
| E' (70°C) (MPa) | 19.29 | 19.97 | 18.51 |
| ΔE' (23-70°C) (MPa) | 5.14 | 4.93 | 4.07 |
| Tan delta (23°C) | 0.248 | 0.227 | 0.209 |
| Tan delta (70°C) | 0.197 | 0.179 | 0.165 |
| IRHD Hardness (23°C) | 88.7 | 89.2 | 89.1 |
| IRHD Hardness (100°C) | 86.8 | 87.5 | 86.9 |
| Peel force (N) (23°C) | 115.0 | 190.2 | 242.1 |

(continued)

| DYNAMIC MECHANICAL PROPERTIES | | | |
|---|---|---|---|
| Peel force (N) (100°C) | 103.4 | 125.5 | 156.0 |
| Tear resistance (kN/m) | 70.1 | 113.1 | 125.2 |
| (*): comparative. | | | |

## Claims

1. Tire comprising at least one structural element including a crosslinked elastomeric material obtained by crosslinking a crosslinkable elastomeric composition comprising:

   (a) 100 phr of at least one elastomeric polymer;
   (b) from 0.1 phr to 15 phr of at least one methylene donor compound;
   (c) from 0.4 phr to 20 phr of at least one methylene acceptor compound;
   (d) from 1 phr to 50 phr of at least one layered material, said layered material having an individual layer thickness of from 0.2 nm to 30 nm;

   wherein said layered material obtained by milling at least one pristine layered material or at least a layered material modified with at least one alkyl ammonium or alkyl phosphonium salts, shows, in an X-ray powder diffraction (XRPD) pattern, a X-ray intensity ratio (R) defined according to the following formula;

$$(R) = [A_{(001)}/A_{(hk0)max}] \times 100$$

   wherein:

   - $A_{(001)}$ is the area of the peak (001)
   - $A_{(hk0)}$ is the area of the most intense peak (hk0), at
   least one of h or k being different from 0 lower than or equal to 20 and said layered material shows, in an X-ray poeder diffraction (XRPD) pattern, a delamination index (DI) higher than or equal to 10%, said delamination index being defined according to the following formula:

$$(DI) = [1 - (I_{001}/I^0_{001})] \times 100$$

   wherein:

   - $I_{001}$ is the intensity of the peak (001) of the mechanically treated layered material;
   - $I^0_{001}$ is the intensity of the peak (001) of the non-mechanically treated layered material;

   said $I_{001}$ and $I^0_{001}$ being defined by the following formulae:

$$I_{001} = A_{(001)} / A_{(hk0)}$$

$$I^0_{001} = A^0_{(001)} / A^0_{(hk0)}$$

   wherein:

   - $A_{(001)}$ is the area of the peak (001) of the mechanically treated layered material;
   - $A^0_{(001)}$ is the area of the peak (001) of the non-mechanically treated layered material;
   - $A(_{hk0})$ is the area of a peak (hk0), at least one of h or k being different from 0, of the mechanically treated layered material;

- $A^0_{(hk0)}$ is the area of a peak (hk0), at least one of h or k being different from 0, of the non-mechanically treated layered material.

2. Tire according to claim 1 comprising:

- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one structural element selected from bead filler, sidewall insert, tread underlayer, tread base, obtained by crosslinking a crosslinkable elastomeric composition comprising:

(a) 100 phr of at least one elastomeric polymer;
(b) from 0.1 phr to 15 phr of at least one methylene donor compound;
(c) from 1 phr to 50 phr of at least one methylene acceptor compound;
(d) from 1 phr to 50 phr of at least one layered material, said layered material having an individual layer thickness of from 0.2 nm to 30 nm;
wherein said layered material obtained by milling at least one pristine layered material or at least a layered material modified with at least one alkyl ammonium or alkyl phosphonium salts, shows, in an X-ray powder diffraction (XRPD) pattern, a X-ray intensity ratio (R) defined according to the following formula:

$$(R) = [A_{(001)}/A_{(hk0)max}] \times 100$$

wherein:

- $A_{(001)}$ is the area of the peak (001)
- $A_{(hk0)}$ is the area of the most intense peak (hk0), at least one of h or k being different from 0 lower than or equal to 20 and said layered material shows, in an X-ray poeder diffraction (XRPD) pattern, a delamination index (DI) higher than or equal to 10%, said delamination index being defined according to the following formula:

$$(DI) = [1 - (I_{001}/I^0_{001})] \times 100$$

wherein:

- $I_{001}$ is the intensity of the peak (001) of the mechanically treated layered material;
- $I^0_{001}$ is the intensity of the peak (001) of the non-mechanically treated layered material;

said $I_{001}$ and $I^0_{001}$ bering defined by the following formulae:

$$I_{001} = A_{(001)} / A_{(hk0)}$$

$$I^0_{001} = A^0_{(001)} / A^0_{(hk0)}$$

wherein:

- $A_{(001)}$ is the area of the peak (001) of the mechanically treated layered material;
- $A^0_{(001)}$ is the area of the peak (001) of the non-mechanically treated layered material;
- $A_{(hk0)}$ is the area of a peak (hk0), at least one of h or k being different from 0, of the mechanically treated layered material;
- $A^0_{(hk0)}$ is the area of a peak (hk0), at least one of h or k being different from 0, of the non-mechanically treated layered material.

**3.** Tire according to claims 1 or 2, wherein said crosslinkable elastomeric composition comprises from 0.3 phr to 10 phr of at least one methylene donor compound (b).

**4.** Tire according to any one of the preceding claims, wherein said crosslinkable elastomeric composition comprises from 0.8 phr to 15 phr of at least one methylene acceptor compound (c).

**5.** Tire according to any one of the preceding claims, wherein said crosslinkable elastomeric composition comprises from 2 phr to 40 phr of at least one layered material (d).

**6.** Tire according to any one of the preceding claims, wherein said at least one layered material (d) has an individual thickness of from 0.3 nm to 15 nm.

**7.** Tire according to any one of preceding claims wherein said X-ray intensity ratio (R) is lower than or equal to 15.

**8.** Tire according to any one of the preceding claims, wherein said layered material has an average particle size (D50) lower than or equal to 70 μm.

**9.** Tire according to any one of the preceding claims, wherein said at least one structural element has a dynamic elastic modulus (E'), measured at 70°C, not lower than 5 MPa.

**10.** Tire according to any one of the preceding claims, wherein said at least one structural element has a tensile modulus at 100% elongation (100% modulus), not lower than 3 MPa.

**11.** Tire according to any one of the preceding claims, wherein said at least one structural element has a IRHD hardness, measured at 23°C, not lower than 65.

**12.** Tire according to any one of the preceding claims, wherein said elastomeric polymer (a) is selected from ($a_1$) diene elastomeric polymers.

**13.** Tire according to any one of claims 1 to 12, wherein said elastomeric polymer (a) is selected from ($a_2$) elastomeric polymers of one or more monoolefins with an olefinic comonomer or derivatives thereof.

**14.** Tire according to any one of the preceding claims, wherein said crosslinkable elastomeric composition comprises at least 10% by weight with respect to the total weight of the at least one elastomeric polymer (a) of natural or synthetic cis-1,4-polyisoprene.

**15.** Tire according to any one of the preceding claims, wherein the methylene donor compound (b) is selected from: hexamethylenetetramine (HMT); hexamethoxymethylmelamine (HMMM); formaldehyde ; paraformaldehyde; trioxane; 2-methyl-2-nitro-1-propanal; substituted melamine resins such as N-substituted oxymethylmelamine resins; glycoluril compounds such as tetramethoxymethyl glycoluril ; urea-formaldehyde resins such as butylated urea-formaldheyde resins; or mixtures thereof.

**16.** Tire according to any one of the preceding claims, wherein the methylene acceptor compound (c) is selected from: resorcinol; catechol; hydroquinone ; pyrogallol; phloroglucinol; 1-naphthol; 2-naphthol;
phenolic resins obtained from the condensation of an optionally substituted phenol with an aldehyde such as formaldehyde, acetaldehyde, furfural; or mixtures thereof.

**17.** Tire according to any one of the preceeding claims, wherein said at least one layered material (d) is obtained by milling at least one pristine layered material.

**18.** Tire according to any one of preceding claims wherein said at least one layered material (d) is obtained by milling at least one layered material modified with at least one alkyl ammonium or alkyl phosphonium salt.

**19.** Tire according to any one of claims 1 to 16, wherein said at least one layered material (d) is obtained by milling a mixture comprising:

- at least one pristine layered material;
- at least one alkyl ammonium or alkyl phosphonium salt.

**20.** Tire according to any one of the preceding claims, wherein said layered material (d) is selected from phyllosilicates such as: smectites, such as montmorillonite, bentonite, nontronite, beidellite, volkonskoite, hectorite, saponite, sauconite; vermiculite; halloisite; sericite; aluminate oxides; hydrotalcite; or mixtures thereof.

**21.** Tire according to any one of the preceding claims, wherein said crosslinkable elastomeric composition comprises from 0 phr to 120 phr of (e) at least one carbon black reinforcing filler.

**22.** Tire according to any one of the preceding claims, wherein said crosslinkable elastomeric composition further comprises (f) at least one silane coupling agent.

**23.** Tire according to any one of the preceding claims, wherein said crosslinkable elastomeric composition further comprises discontinuous fibres (g).

## Patentansprüche

**1.** Reifen, umfassend mindestens ein strukturelles Element, das ein vernetztes elastomeres Material beinhaltet, erhalten durch Vernetzen einer vernetzbaren elastomeren Zusammensetzung umfassend:

(a) 100 phr von mindestens einem elastomeren Polymer;
(b) von 0,1 phr bis 15 phr von mindestens einer Methylen-Donorverbindung;
(c) von 0,4 phr bis 20 phr von mindestens einer Methylen-Akzeptorverbindung;
(d) von 1 phr bis 50 phr von mindestens einem Schichtmaterial, wobei das Schichtmaterial eine individuelle Schichtdicke von 0,2 nm bis 30 nm aufweist;
worin das Schichtmaterial, erhalten durch Mahlen von mindestens einem reinen Schichtmaterial oder mindestens einem Schichtmaterial, das mit mindestens einem Alkylammonium- oder Alkylphosphoniumsalzen modifiziert ist, in einem Pulver-Röntgenbeugungsmuster (XRPD) ein Röntgen-Intensitätsverhältnis (R) zeigt, definiert gemäß der folgenden Formel:

$$(R) = [A_{(001)}/A_{(hk0)max}] \times 100$$

worin:

- $A_{(001)}$ die Fläche des Peaks (001) ist,
- $A_{(hk0)}$ die Fläche des intensivsten Peaks (hk0) ist, wobei mindestens eines von h oder k von 0 verschieden ist,

welches kleiner oder gleich 20 ist, und worin das Schichtmaterial in einem Pulver-Röntgenbeugungsmuster (XRPD) einen Delaminationsindex (DI) zeigt, der größer oder gleich 10 % ist, worin der Delaminationsindex gemäß der folgenden Formel definiert ist:

$$(DI) = [1 - (I_{001}/I^0_{001})] \times 100$$

worin:

- $I_{001}$ die Intensität des Peaks (001) des mechanisch behandelten Schichtmaterials ist,
- $I^0_{001}$ die Intensität des Peaks (001) des nicht-mechanisch behandelten Schichtmaterials ist;

worin $I_{001}$ und $I^0_{001}$ durch die folgenden Formeln definiert sind:

$$I_{001} = A_{(001)}/ \quad A_{(hk0)}$$

$$I^0_{001} = A^0_{001} \ / \quad A^0_{(hk0)}$$

worin:

- $A_{(001)}$ die Fläche des Peaks (001) des mechanisch behandelten Schichtmaterials ist,
- $A^0_{(001)}$ die Fläche des Peaks (001) des nicht-mechanisch behandelten Schichtmaterials ist,
- $A_{(hk0)}$ die Fläche des Peaks (hk0) des mechanisch behandelten Schichtmaterials ist, worin mindestens eines von h oder k von 0 verschieden ist;
- $A^0_{(hk0)}$ die Fläche des Peaks (hk0) des nicht-mechanisch behandelten Schichtmaterials ist, worin mindestens eines von h oder k von 0 verschieden ist.

**2.** Reifen gemäß Anspruch 1, umfassend:

- eine Karkassenstruktur von im wesentlichen toroidaler Form, die gegenüberliegende Seitenkanten aufweist, wie mit den entsprechenden rechtsseitigen und linksseitigen Wulststrukturen assoziiert sind, wobei die Wulststrukturen mindestens einen Wulstkern und mindestens einen Wulstfüller umfassen;
- eine Bandstruktur, die in radial externer Position in Bezug auf die Karkassenstruktur angeordnet ist;
- ein Laufflächenband, das radial auf der Bandstruktur überlagert ist;
- ein Paar Seitenwände, die lateral auf gegenüberliegenden Seiten in Bezug auf die Karkassenstruktur angeordnet sind;
- mindestens ein strukturelles Element, das ausgewählt ist aus einem Wulstfüller, einem Seitenwandeinsatz, einer Laufflächen-Unterschicht, einer Laufflächenbasis, erhalten durch Vernetzen einer vernetzbaren elastomeren Zusammensetzung umfassend:

(a) 100 phr von mindestens einem elastomeren Polymer;
(b) von 0,1 phr bis 15 phr von mindestens einer Methylen-Donorverbindung;
(c) von 1 phr bis 50 phr von mindestens einer Methylen-Akzeptorverbindung;
(d) von 1 phr bis 50 phr von mindestens einem Schichtmaterial, wobei das Schichtmaterial eine individuelle Schichtdicke von 0,2 nm bis 30 nm aufweist;
worin das Schichtmaterial, erhalten durch Mahlen von mindestens einem reinen Schichtmaterial oder mindestens einem Schichtmaterial, das mit mindestens einem Alkylammonium- oder Alkylphosphoniumsalzen modifiziert ist, in einem Röntgen-Pulverbeugungsmuster (XRPD) ein Röntgen-Intensitätsverhältnis (R) zeigt, definiert gemäß der folgenden Formel:

$$(R) = [A_{001}/A_{(hk0)max}] \times 100$$

worin:

- $A_{(001)}$ die Fläche des Peaks (001) ist,
- $A_{(hk0)}$ die Fläche des intensivsten Peaks (hk0) ist, wobei mindestens eines von h oder k von 0 verschieden ist,

welches kleiner oder gleich 20 ist, und worin das Schichtmaterial in einem Pulver-Röntgenbeugungsmuster (XRPD) einen Delaminationsindex (DI) zeigt, der größer oder gleich 10 % ist, worin der Delaminationsindex gemäß der folgenden Formel definiert ist:

$$(DI) = [1 - (I_{001}/I^0_{001})] \times 100$$

worin:

- $I_{001}$ die Intensität des Peaks (001) des mechanisch behandelten Schichtmaterials ist,
- $I^0_{001}$ die Intensität des Peaks (001) des nicht-mechanisch behandelten Schichtmaterials ist;

worin $I_{001}$ und $I^0_{001}$ durch die folgenden Formeln definiert sind:

$$I_{001} = A_{(001)}/ \quad A_{(hk0)}$$

$$I^0_{001} = A^0_{(001)} / A^0_{(hk0)}$$

worin:

- $A_{(001)}$ die Fläche des Peaks (001) des mechanisch behandelten Schichtmaterials ist,
- $A^0_{(001)}$ die Fläche des Peaks (001) des nicht-mechanisch behandelten Schichtmaterials ist,
- $A_{(hk0)}$ die Fläche des Peaks (hk0) des mechanisch behandelten Schichtmaterials ist, worin mindestens eines von h oder k von 0 verschieden ist;
- $A^0_{(hk0)}$ die Fläche des Peaks (hk0) des nicht-mechanisch behandelten Schichtmaterials ist, worin mindestens eines von h oder k von 0 verschieden ist.

**3.** Reifen gemäß Anspruch 1 oder 2, worin die vernetzbare elastomere Zusammensetzung von 0,3 phr bis 10 phr von mindestens einer Methylen-Donorverbindung (b) umfasst.

**4.** Reifen gemäß irgendeinem der vorhergehenden Ansprüche, worin die vernetzbare elastomere Zusammensetzung von 0,8 phr bis 15 phr von mindestens einer Methylen-Akzeptorverbindung (c) umfasst.

**5.** Reifen gemäß irgendeinem der vorhergehenden Ansprüche, worin die vernetzbare elastomere Zusammensetzung von 2 phr bis 40 phr von mindestens einem Schichtmaterial (d) umfasst.

**6.** Reifen gemäß irgendeinem der vorhergehenden Ansprüche, worin das mindestens eine Schichtmaterial (d) eine individuelle Dicke von 0,3 nm bis 15 nm aufweist.

**7.** Reifen gemäß irgendeinem der vorhergehenden Ansprüche, worin das Röntgen-Intensitätsverhältnis (R) kleiner als oder gleich 15 ist.

**8.** Reifen gemäß irgendeinem der vorhergehenden Ansprüche, worin das Schichtmaterial eine mittlere Partikelgröße (D50) von kleiner als oder gleich 70 μm aufweist.

**9.** Reifen gemäß irgendeinem der vorhergehenden Ansprüche, worin das mindestens eine strukturelle Element ein dynamisches Elastizitätsmodul (E'), gemessen bei 70°C, von nicht kleiner als 5 MPa aufweist.

**10.** Reifen gemäß irgendeinem der vorhergehenden Ansprüche, worin das mindestens eine strukturelle Element ein Zugmodul bei 100 % Dehnung (100 %-Modul) von nicht kleiner als 3 MPa aufweist.

**11.** Reifen gemäß irgendeinem der vorhergehenden Ansprüche, worin das mindestens eine strukturelle Element eine IRHD-Härte, gemessen bei 23°C, von nicht kleiner als 65 aufweist.

**12.** Reifen gemäß irgendeinem der vorhergehenden Ansprüche, worin das elastomere Polymer (a) ausgewählt ist aus ($a_1$) elastomeren Dien-Polymeren.

**13.** Reifen gemäß irgendeinem der vorhergehenden Ansprüche, worin das elastomere Polymer (a) ausgewählt ist aus ($a_2$) elastomeren Polymeren von einem oder mehreren Monoolefinen mit einem olefinischen Comonomer oder Derivaten hiervon.

**14.** Reifen gemäß irgendeinem der vorhergehenden Ansprüche, worin die vernetzbare elastomere Zusammensetzung mindestens 10 Gew.% von natürlichem oder synthetischem cis-1,4-Polyisopren umfasst, bezogen auf das Gesamtwicht von dem mindestens einen elastomeren Polymer (a).

**15.** Reifen gemäß irgendeinem der vorhergehenden Ansprüche, worin die Methylen-Donorverbindung (b) ausgewählt ist aus: Hexamethylentetramin (HMT); Hexamethoxymethylmelamin (HMMM); Formaldehyd; Paraformaldehyd; Trioxan; 2-Methyl-2-nitro-1-propanal, substituierten Mealminharzen, wie z.B. N-substituierte Oximethylmelaminharze; Glycolurilverbindungen, wie z.B. Tetramethoxymethylglycoluril; Urea-Formaldehydharzen, wie z.B. butylierten Urea-Formaldehydharzen; oder Mischungen davon.

**16.** Reifen gemäß irgendeinem der vorhergehenden Ansprüche, worin die Methylen-Akzeptorverbindung (c) ausgewählt

ist aus: Resorcinol, Catechol; Hydrochinon; Pyrogallol; Phloroglucinol; 1-Naphthol; 2-Naphthol; Phenolharzen, die aus der Kondensation eines optional substituierten Phenols mit einem Aldehyd, wie z.B. Formaldehyd, Acetaldehyd, Furfural, erhalten sind; oder Mischungen hiervon.

**17.** Reifen gemäß irgendeinem der vorhergehenden Ansprüche, worin das mindestens eine Schichtmaterial (d) erhalten ist durch Mahlen von mindestens einem reinen Schichtmaterial.

**18.** Reifen gemäß irgendeinem der vorhergehenden Ansprüche, worin das mindestens eine Schichtmaterial (d) erhalten ist durch Mahlen von mindestens einem Schichtmaterial, das mit mindestens einem Alkylammonium- oder Alkylphosphoniumsalz modifiziert ist.

**19.** Reifen gemäß irgendeinem der Ansprüche 1 bis 16, worin das mindestens eine Schichtmaterial (d) erhalten ist durch Mahlen einer Mischung umfassend:

- mindestens ein reines Schichtmaterial;
- mindestens ein Alkylammonium- oder Alkylphosphoniumsalz.

**20.** Reifen gemäß irgendeinem der vorhergehenden Ansprüche, worin das Schichtmaterial (d) ausgewählt ist aus Phyllosilikaten, wie z.B.: Smektiten, wie z.B. Montmorillonit, Bentonit, Nontronit, Beidellit, Volkonskoit, Hectorit, Saponit, Sauconit; Vermiculit; Halloisit; Sericit; Aluminatoxiden; Hydrotalcit; oder Mischungen hiervon.

**21.** Reifen gemäß irgendeinem der vorhergehenden Ansprüche, worin die vernetzbare elastomere Zusammensetzung von 0 phr bis 120 phr von (e) mindestens einem verstärkenden Rußfüllstoff umfasst.

**22.** Reifen gemäß irgendeinem der vorhergehenden Ansprüche, worin die vernetzbare elastomere Zusammensetzung ferner (f) mindestens ein Silankupplungsmittel umfasst.

**23.** Reifen gemäß irgendeinem der vorhergehenden Ansprüche, worin die vernetzbare elastomere Zusammensetzung ferner diskontinuierliche Fasern (g) umfasst.

## Revendications

**1.** Pneumatique comprenant au moins un élément de structure comprenant un matériau élastomère réticulé obtenu par réticulation d'une composition d'élastomère réticulable comprenant :

(a) 100 pcpr (parties pour 100 parties de résine) d'au moins un polymère élastomère ;
(b) de 0,1 pcpr à 15 pcpr de caoutchouc d'au moins un composé donneur de méthylène ;
(c) de 0,4 pcpr à 20 pcpr d'au moins un composé accepteur de méthylène;
(d) de 1 pcpr à 50 pcpr d'au moins un matériau en couches, ledit matériau en couches ayant une épaisseur de 0,2 nm à 30 nm de la couche individuelle,
dans lequel, ledit matériau en couches, obtenu en usinant au moins un matériau en couche vierge ou au moins un matériau en couches modifié par au moins un sel d'alkyl ammonium ou d'alkyl phosphonium, montre dans un diagramme de diffraction des rayons X sur poudre (XRPD), un rapport d'intensité des rayons X (R) défini selon la formule suivante :

$$(R) = [A_{(001)} / A_{(hk0)\ max}] \times 100$$

dans laquelle :

- $A_{(001)}$ est l'aire du pic (001),
- $A_{(hk0)\ max}$ est l'aire du pic le plus intense (hk0), au moins l'un de h et k étant différent de 0,

inférieur ou égal à 20 et ledit matériau montre dans un diagramme de diffraction des rayons X sur poudre (XRPD), un index de délamination (DI) supérieur ou égal à 10 %, ledit index de délamination étant défini selon la formule suivante :

$$DI = [1-(I_{(001)}/I^0_{(001)})]x100$$

dans laquelle :

- $I_{(001)}$ est intensity du pic (001) du matériau en couche traité mécaniquement,
- $I^0_{(001)}$ est l'intensité du pic (001) du matériau en couche non traité mécaniquement,

lesdits $I_{(001)}$ et $I^0_{(001)}$ étant définis par la formule suivante :

$$I_{(001)} = A_{(001)} / A_{(hk0)}$$

$$I^0_{(001)} = A^0_{(001)} / A^0_{(hk0)}$$

où

- $A_{(001)}$ est l'aire du pic (001) du matériau en couche traité mécaniquement,
- $A^0_{(001)}$ est l'aire du pic (001) du matériau en couche non-traité mécaniquement,
- $A_{(hk0)}$ est l'aire du pic (hk0), au moins l'un de h et k étant différent de 0, du matériau en couche traité mécaniquement,
- $A^0_{(hk0)}$ est l'aire du pic (hk0), au moins l'un de h et k étant différent de 0, du matériau en couche non-traité mécaniquement.

**2.** Pneumatique selon la revendication 1, comprenant :

- une structure de carcasse de forme sensiblement toroïdale, ayant des bords latéraux opposés associés à des structures de talon respectivement droite et gauche, lesdites structures de talon comprenant au moins une tringle et au moins remplissage de talon ;
- une structure de ceinture appliquée sur ladite structure de carcasse en position radialement extérieure par rapport à ladite carcasse ;
- une bande de roulement superposée radialement sur ladite structure de ceinture ;
- une paire de flancs appliqués latéralement sur les côtés opposés de ladite structure de carcasse ;
- au moins un élément de structure choisi parmi un remplissage de talon, un insert de flanc, une sous-couche de bande de roulement et une base de bande de roulement, obtenu par réticulation d'une composition élastomère réticulable comprenant :

(a) 100 pcpr (parties pour 100 parties de résine) d'au moins un polymère élastomère ;
(b) de 0,1 pcpr à 15 pcpr de caoutchouc d'au moins un composé donneur de méthylène ;
(c) de 1 pcpr à 50 pcpr d'au moins un composé accepteur de méthylène ;
(d) de 1 pcpr à 50 pcpr d'au moins un matériau en couches, ledit matériau en couches ayant une épaisseur de 0,2 nm à 30 nm de la couche individuelle,
dans lequel, ledit matériau en couches, obtenu en broyant au moins un matériau en couche vierge ou au moins un matériau en couches modifié par au moins un sel d'alkyl ammonium ou d'alkyl phosphonium, montre dans un diagramme de diffraction des rayons X sur poudre (XRPD), un rapport d'intensité des rayons X (R) défini selon la formule suivante :

$$(R) = [A_{(001)} / A_{(hk0)\,max}] \times 100$$

dans laquelle :

- $A_{(001)}$ est l'aire du pic (001),
- $A_{(hk0)\,max}$ est l'aire du pic le plus intense (hk0), au moins l'un de h et k étant différent de 0,
inférieur ou égal à 20 et ledit matériau montre dans un diagramme de diffraction des rayons X sur poudre (XRPD), un index de délamination (DI) supérieur ou égal à 10 %, ledit index de délamination étant défini selon

la formule suivante :

$$DI = [1-(I_{(001)}/I^{0}_{(001)})]x100$$

dans laquelle :
- $I_{(001)}$ est l'intensité du pic (001) du matériau en couche traité mécaniquement,
- $I^{0}_{(001)}$ est l'intensité du pic (001) du matériau en couche non traité mécaniquement,
lesdits $I_{(001)}$ et $I^{0}_{(001)}$ étant définis par la formule suivante :

$$I_{(001)} = A_{(001)} / A_{(hk0)}$$

$$I^{0}_{(001)} = A^{0}_{(001)} / A^{0}_{(hk0)}$$

où
- $A_{(001)}$ est l'aire du pic (001) du matériau en couche traité mécaniquement,
- $A^{0}_{(001)}$ est l'aire du pic (001) du matériau en couche non-traité mécaniquement,
- $A_{(hk0)}$ est l'aire du pic (hk0), au moins l'un de h et k étant différent de 0, du matériau en couche traité mécaniquement,
- $A^{0}_{(hk0)}$ est l'aire du pic (hk0), au moins l'un de h et k étant différent de 0, du matériau en couche non-traité mécaniquement.

3. Pneumatique selon la revendication 1 ou 2, dans lequel ladite composition élastomère réticulable comprend de 0,3 pcpr à 10 pcpr d'au moins un composé donneur de méthylène (b).

4. Pneumatique selon l'une quelconque des revendications précédentes, dans lequel ladite composition élastomère réticulable comprend de 0,8 pcpr à 15 pcpr d'au moins un composé accepteur de méthylène (c).

5. Pneumatique selon l'une quelconque des revendications précédentes, dans lequel ladite composition élastomère réticulable comprend de 2 pcpr à 40 pcpr d'au moins un matériau en couches (d).

6. Pneumatique selon l'une quelconque des revendications précédentes, dans lequel ledit au moins un matériau en couches (d) a une épaisseur de couche individuelle de 0,3 nm à 15 nm.

7. Pneumatique selon l'une quelconque des revendications précédentes, dans lequel ledit rapport d'intensité des rayons X (R) est inférieur ou égal à 15.

8. Pneumatique selon l'une quelconque des revendications précédentes, dans lequel ledit matériau en couches a une taille moyenne de particules (D50) inférieure ou égale à 70 μm.

9. Pneumatique selon l'une quelconque des revendications précédentes, dans lequel ledit au moins un élément de structure présente un module d'élasticité dynamique (E '), mesuré à 70 ° C, qui n'est pas inférieur à 5 MPa.

10. Pneumatique selon l'une quelconque des revendications précédentes, dans lequel ledit au moins un élément de structure présente un module de traction à 100% d'allongement (100% Module) qui n'est pas inférieur à 3 MPa.

11. Pneumatique selon l'une quelconque des revendications précédentes, dans lequel ledit au moins un élément de structure présente une dureté IRHD, mesurée à 23 °C qui n'est pas inférieure à 65.

12. Pneumatique selon l'une quelconque des revendications précédentes, dans lequel ledit élastomère polymère (a) est choisi parmi ($a_1$) polymères élastomères de diène.

13. Pneumatique selon l'une quelconque des revendications précédentes, dans lequel ledit élastomère polymère (a) est choisi parmi ($a_2$) polymères élastomères d'une ou plusieurs monooléfines avec un co-monomère oléfinique ou leurs dérivés.

**14.** Pneumatique selon l'une quelconque des revendications précédentes, dans lequel ladite composition élastomère réticulable comprend au moins 10% en poids par rapport au poids total de l'au moins un polymère élastomère (a) d'origine naturelle ou synthétique de cis-1, 4 - polyisoprène.

**15.** Pneumatique selon l'une quelconque des revendications précédentes, dans lequel ledit au moins un composé donneur de méthylène (b) est choisi parmi : l'hexaméthylènetétramine (HMT); hexaméthoxyméthylmélamine (HMMM), le formaldéhyde, le paraformaldéhyde, le trioxane, le 2-méthyl-2-nitro-1- propanal; les résines de mélamine substituée comme l'oxyméthylmélamine N-substituée ; les dérivés du glycolurile tels que le tétraméthoxyméthy glycolurile l; les résines urée-formaldéhyde comme les résines urée-formaldheyde butylées, et leurs mélanges.

**16.** Pneumatique selon l'une quelconque des revendications précédentes, dans lequel ledit au moins un composé accepteur de méthylène (d) est choisi parmi : le résorcinol ; le catéchol ; l'hydroquinone ; le pyrogallol ; le phloroglucinol, le 1-naphtol, le 2-naphtol, les résines phénoliques obtenues par condensation d'un phénol éventuellement substitué avec un aldéhyde tel que le formaldéhyde, l'acétaldéhyde, le furfural, ou leurs mélanges.

**17.** Pneumatique selon l'une quelconque des revendications précédentes, dans lequel ledit au moins un matériau en couches (d) est obtenu par usinage d'au moins un matériau en couches vierge.

**18.** Pneumatique selon l'une quelconque des revendications précédentes, dans lequel ledit au moins un matériau en couches (d) est obtenu par usinage d'au moins un matériau en couches modifié par au moins un sel d'alkyl ammonium ou d'alkyle phosphonium.

**19.** Pneumatique selon l'une quelconque des revendications 1 à 16, dans lequel ledit au moins un matériau en couches (d) est obtenu par broyage d'un mélange comprenant:

- au moins un matériau en couches vierge ;
- au moins un sel d'alkyl ammonium ou d'alkyle phosphonium.

**20.** Pneumatique selon l'une quelconque des revendications précédentes, dans lequel ledit matériau en couches (d) est choisi parmi les phyllosilicates tels que : les smectites, telles que la montmorillonite, la bentonite, la nontronite, la beidellite, la volkonskoïte, l'hectorite, la saponite, la sauconite, la vermiculite ; l'halloisite, la séricite, les oxydes d'aluminate, l'hydrotalcite, ou leurs mélanges.

**21.** Pneumatique selon l'une quelconque des revendications précédentes, dans lequel ladite composition élastomère réticulable comprend de 0 à 120 pcpr de (e) au moins une charge renforçante qui est du noir de carbone.

**22.** Pneumatique selon l'une quelconque des revendications précédentes, dans lequel ladite composition élastomère réticulable comprend (f) au moins un agent de couplage qui est du silane.

**23.** Pneumatique selon l'une quelconque des revendications précédentes, dans lequel ladite composition élastomère réticulable comprend en outre des fibres discontinues (g).

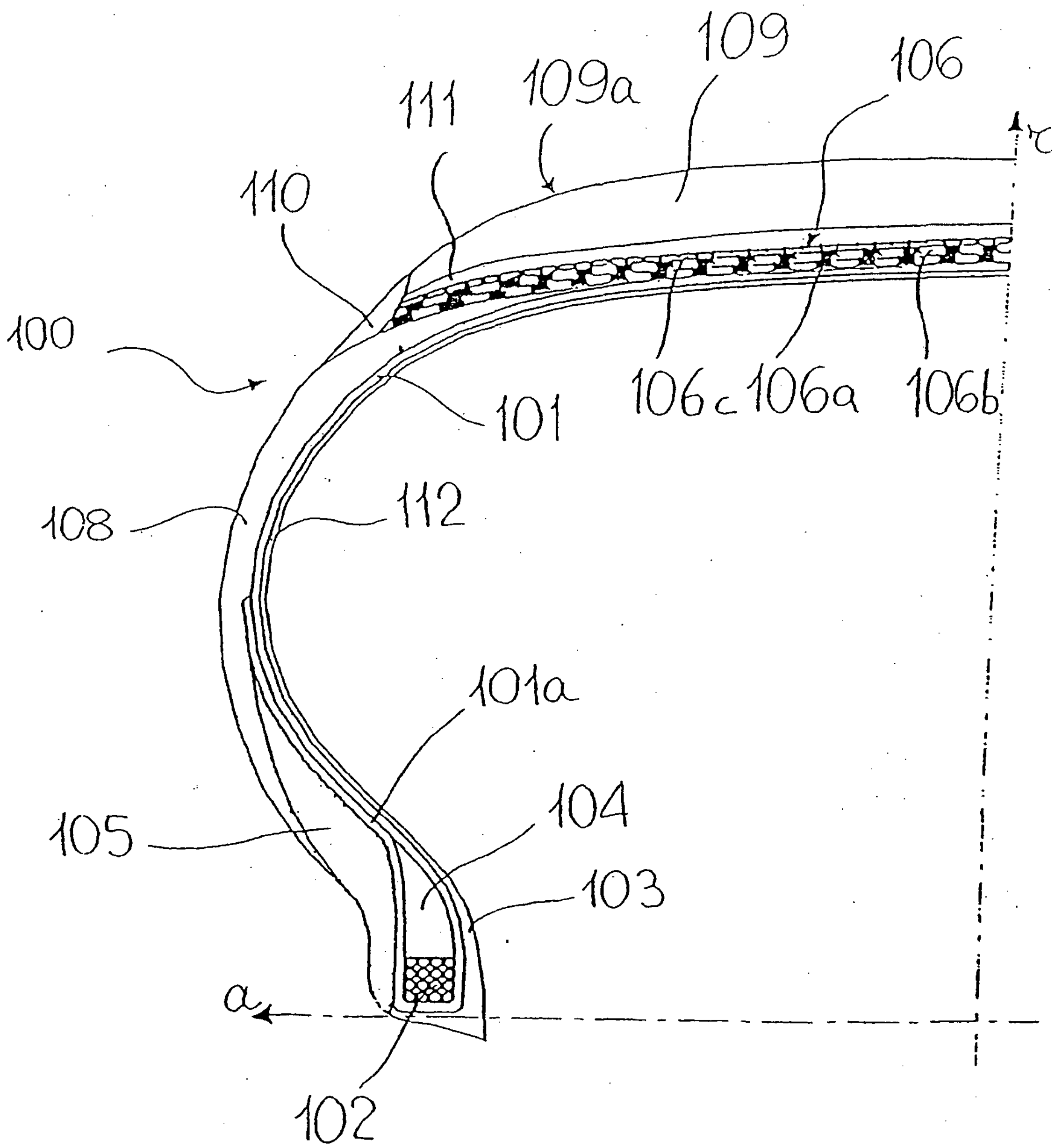
109
106
109a
111
r
110
100
101
106c
106a
106b
108
112
101a
104
105
103
a
102

FIG. 1

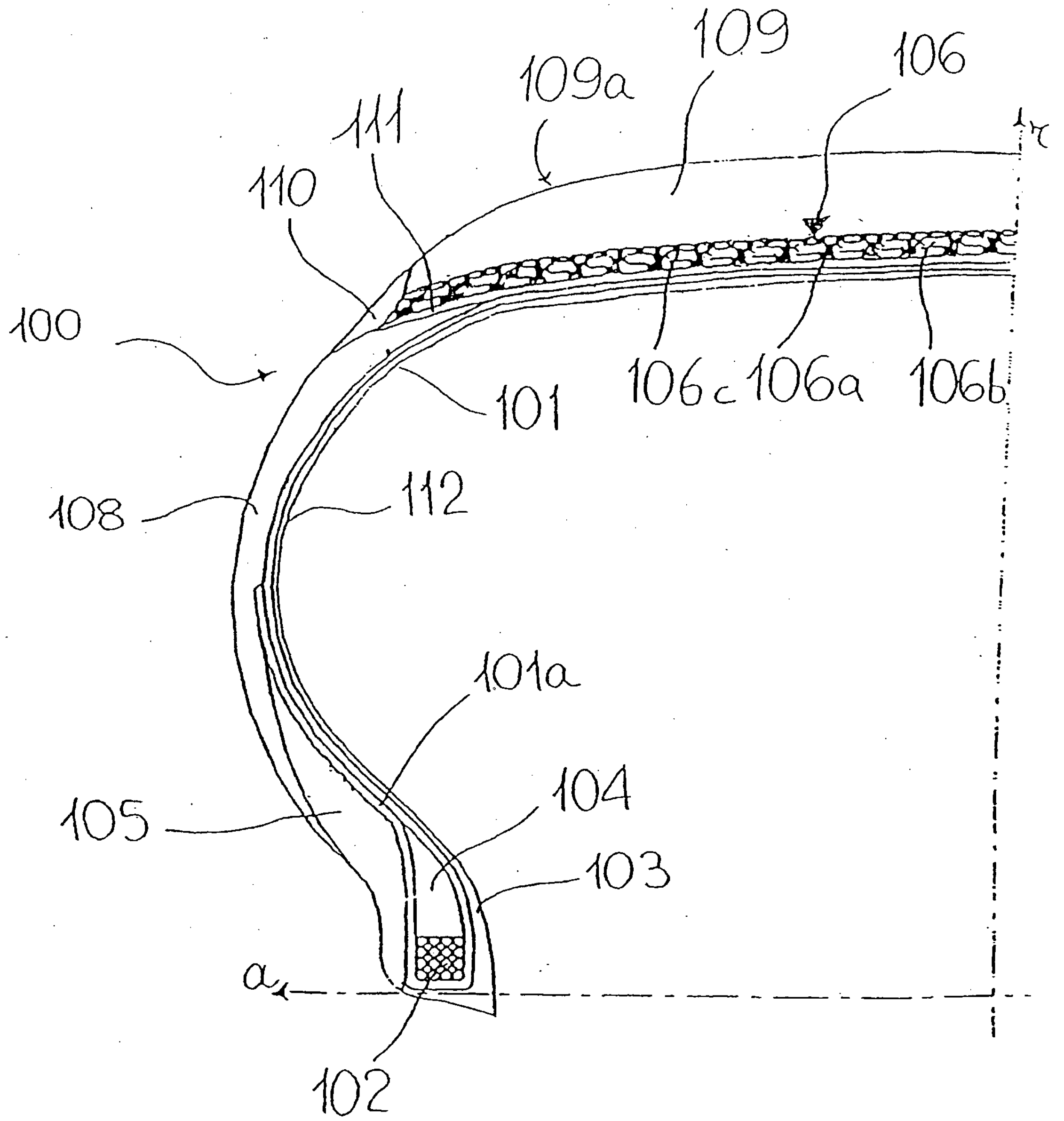
109a
109
106
r
111
110
100
101
106c
106a
106b
108
112
101a
104
105
103
a
102

FIG. 2

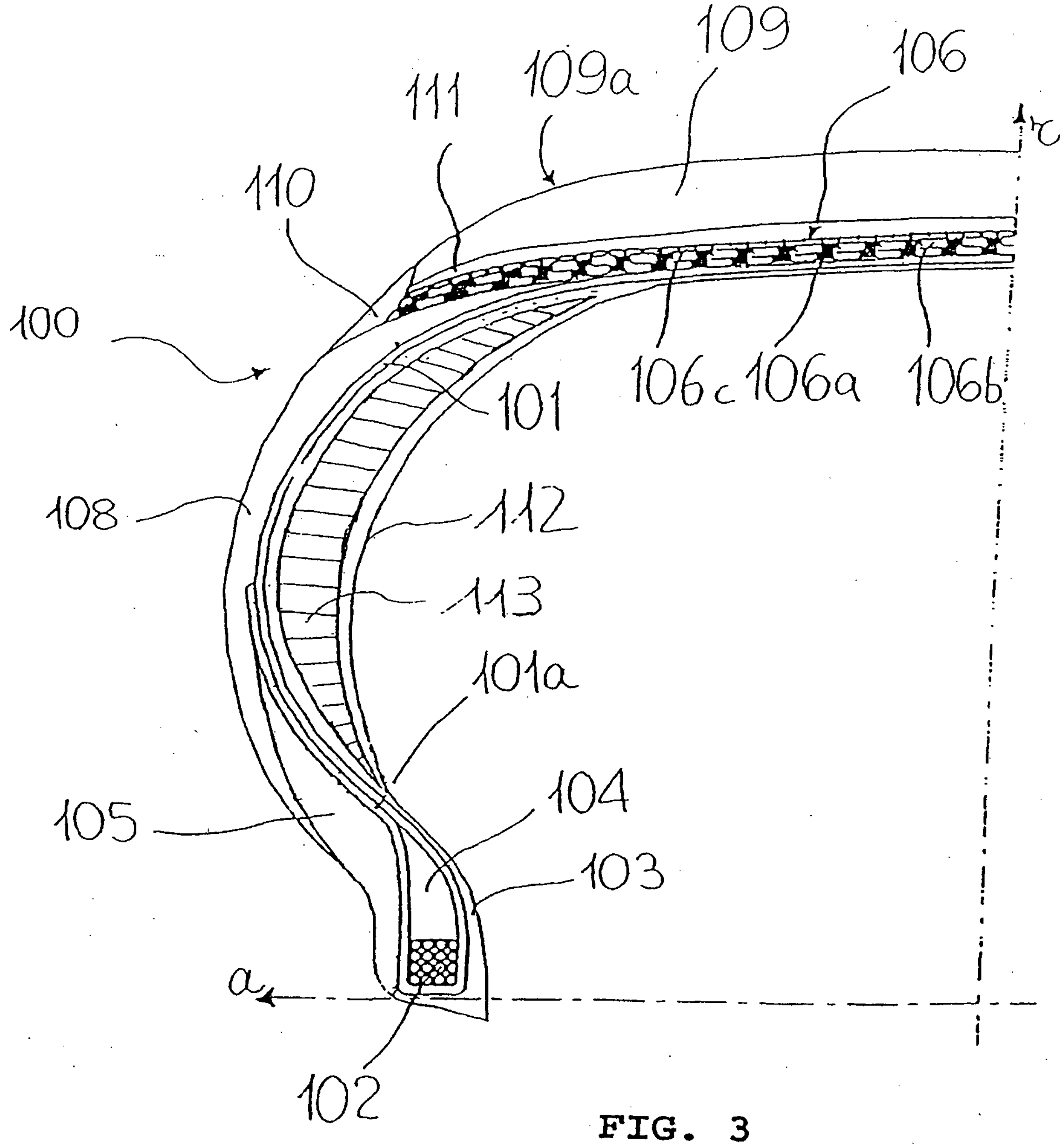
109a
109
106
r
111
110
100
106c
106a
106b
101
108
112
113
101a
105
104
103
a
102

FIG. 3

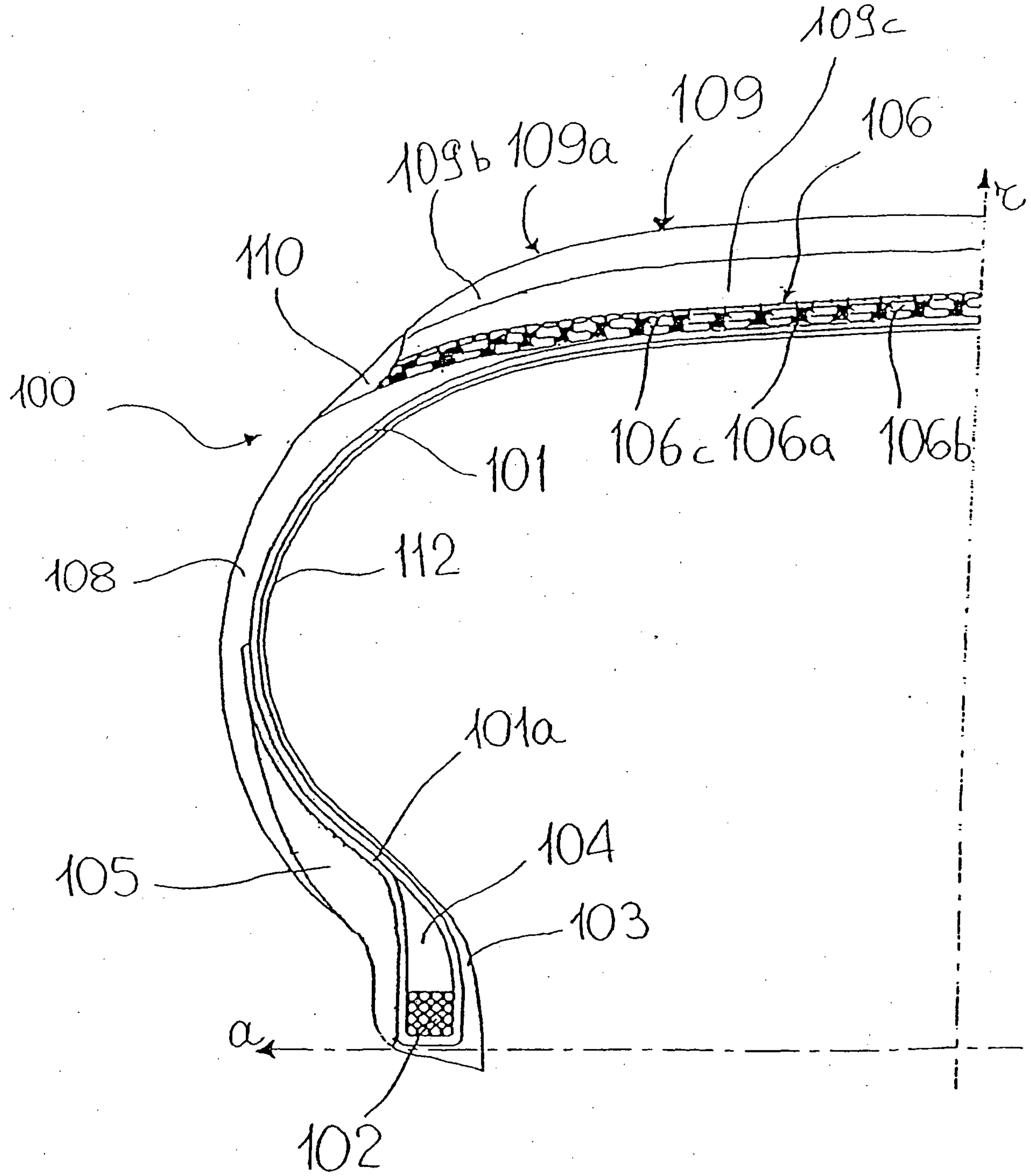
109c
109
106
109b
109a
r
110
100
106c
106a
106b
101
108
112
101a
104
105
103
a
102

FIG. 4

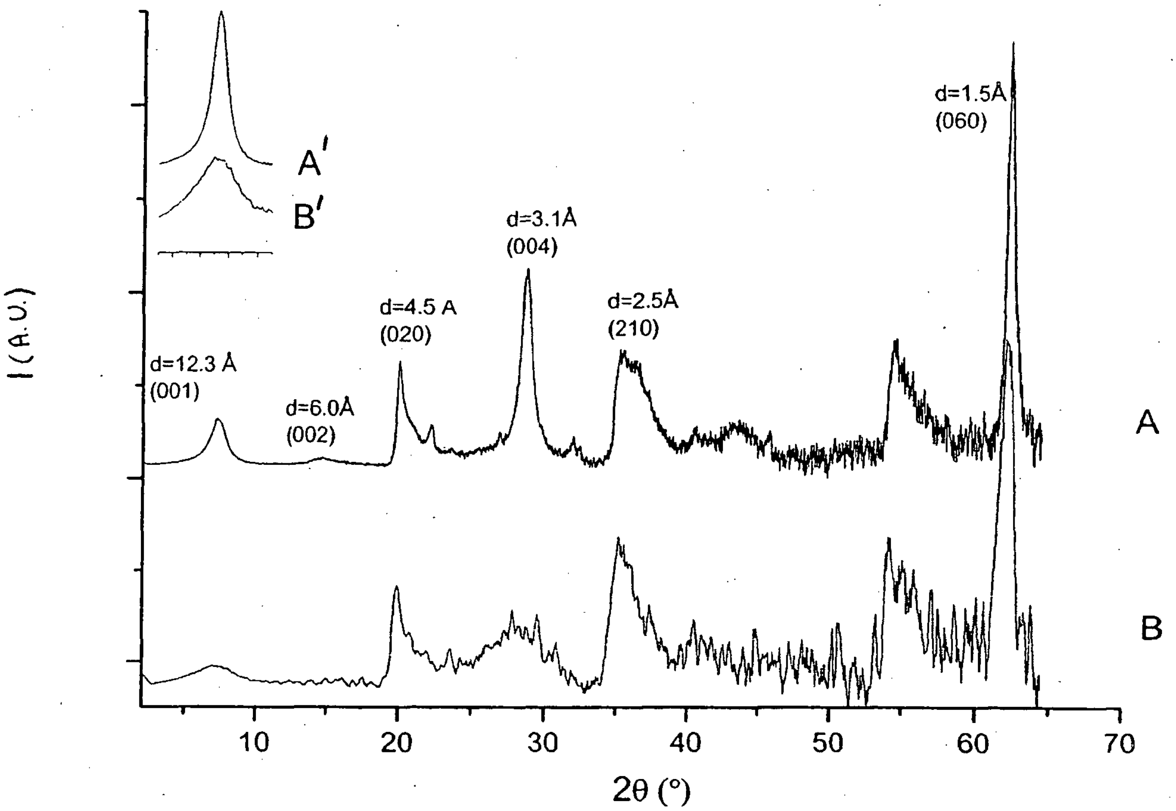
I (A.U.)
A'
B'
d=12.3 Å
(001)
d=6.0Å
(002)
d=4.5 A
(020)
d=3.1Å
(004)
d=2.5Å
(210)
d=1.5Å
(060)
A
B
10
20
30
40
50
60
70
2θ (°)

FIG. 5

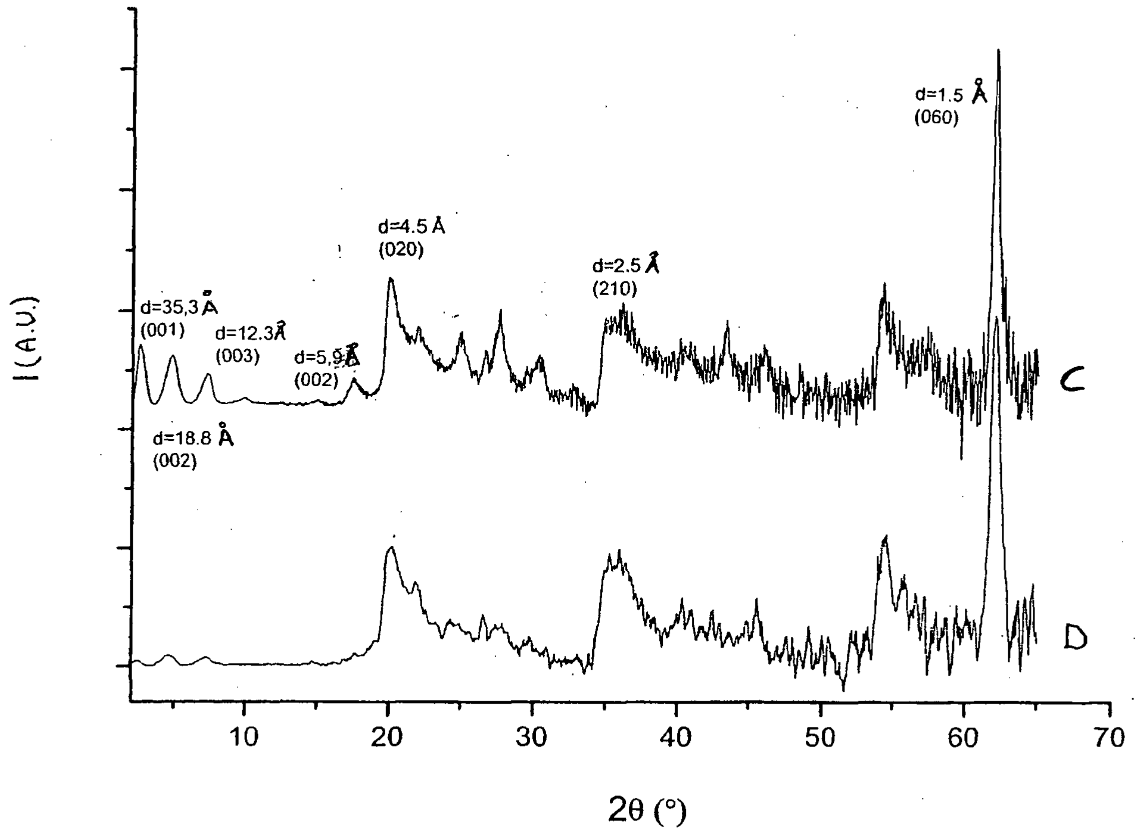
d=1.5 Å
(060)
d=4.5 Å
(020)
d=2.5 Å
(210)
d=35,3 Å
(001)
d=12.3Å
(003)
d=5,9 Å
(002)
d=18.8 Å
(002)
I (A.U.)
C
D
10
20
30
40
50
60
70
2θ (°)

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6197105 B
- US 2004249045 A
- WO 2006079404 A
- WO 2005042278 A
- EP 451604 A
- US 4742124 A
- US 4550142 A
- US 4136103 A
- US 5747560 A
- US 5952093 A
- US 4871004 A
- EP 928680 A
- EP 928702 A
- US 5238040 A
- EP 943466 A
- EP 199064 A
- US 4872822 A
- US 4768937 A


### Non-patent literature cited in the description


- **HAROLD P. KLUG ; LEROY E. ALEXANDER.** X-Ray Diffraction Procedures for Polycrystalline and Amorphous Materials. Wiley-Interscience Publication, 1974, 142-144